# FASCICULE DE BREVET EUROPEEN

(11) **EP 3 966 105 B1**
(45) Date de publication et mention de la délivrance du brevet: **23.10.2024**
(21) Numéro de dépôt: 20736416.7
(22) Date de dépôt: 02.06.2020
(51) Int. Cl.: B63C 1/02, B60F 3/00, B63J 3/04

(54) **ENGIN MARIN**
SEEFAHRZEUG
MARINE CRAFT

(30) Priorité: 14.06.2019 FR 1906417; 27.06.2019 US 201962867258 P; 20.12.2019 US 201962951224 P; 31.01.2020 US 202062968365 P; 05.05.2019 FR 1904707
(43) Date de publication de la demande: 16.03.2022
(73) Titulaire: Maim, Enrico, 8835 Feusisberg (CH)
(72) Inventeur: Maim, Enrico, 8835 Feusisberg (CH)
(86) Numéro de dépôt international: PCT/IB2020/055193
(87) Numéro de publication internationale: WO 2020/225802

(56) Documents cités:
- EP-A1- 3 299 273
- KR-A- 20130 029 542
- US-A- 3 645 225
- US-A1- 2007 283 866

## Description

La présente invention concerne d'une façon générale les engins marins tels que les navires de plaisance ou utilitaires.

On connaît depuis quelques temps des navires de type catamaran possédant un toit dont l'essentiel de la surface comprend des panneaux photovoltaïques. Voir par exemple les catamarans commercialisés par les sociétés Silent-Yachts, Soel Yachts, etc.

La surface importante de la conversion photovoltaïque permet de donner au navire une autonomie importante, et d'utiliser des moyens de propulsion relativement puissants et très silencieux. Un engin marin conforme à l'état de la technique est par exemple décrit dans le document EP3299273.

La présente invention vise à enrichir les possibilités offertes par ce type de navire.

On propose à cet effet un ensemble naviguant, comprenant un première structure flottante comprenant au moins deux coques délimitant entre elles un espace, et un agencement photovoltaïque occupant une partie substantielle de l'emprise de la structure flottante, et une deuxième structure flottante dotée d'un propulseur électrique et d'une batterie, des moyens pour assembler les deux structures flottantes de façon séparable, l'ensemble comprenant des moyens de connexion électrique entre l'agencement photovoltaïque de la première structure flottante et la batterie de la deuxième structure flottante, cette dernière pouvant être sélectivement utilisée soit pour mouvoir les deux structures avec guidage directionnel, soit comme engin marin motorisé autonome.

D'autres caractéristiques avantageuses mais non limitatives de cet ensemble sont les suivants :
- les moyens d'assemblage comprennent des moyens d'arrimage dont des moyens d'absorption de chocs et/ou de déformations.
- la première structure flottante comprend également des propulseurs électriques.
- la première structure flottante comprend également des batteries.
- l'ensemble comprend des moyens de commande de l'inclinaison entre un axe principal de la première structure et un axe principal de le deuxième structure flottante.
- les moyens de commande d'inclinaison comprennent une liaison pivotante entre la première structure flottante et la deuxième structure flottante, et des moyens pour solliciter la deuxième structure à partir de la première structure à distance de la liaison pivotante.
- le point de pivotement est fixe.
- le point de pivotement est situé en arrière d'un point où s'exercent les moyens de sollicitation.
- les moyens de sollicitation comprennent un moyen d'entraînement d'une roue dentée contre une crémaillère incurvée centrée sur le point de pivotement.
- le point de pivotement peut se déplacer par rapport à la première structure.
- le point de pivotement est apte à glisser contre une surface d'appui, le point de pivotement et la surface d'appui étant aptes à transmettre à la première structure une propulsion générée au niveau de la deuxième structure.
- la surface d'appui est incurvée.
- les moyens de sollicitation sont aptes à exercer une traction latéralement sur la seconde structure en arrière de la liaison pivotante.
- la première structure flottante comprend une première paire de flotteurs latéraux fixes et une deuxième paire de flotteurs montés sur un équipage mobile pivotant autour d'un axe vertical, les flotteurs de la deuxième paire étant situés en avant des flotteurs de la première paire.
- les moyens d'arrimage comprennent un moyen de traction de la première structure par la deuxième structure.
- la deuxième structure est reliée à l'équipage mobile de la première structure, ledit équipage mobile adaptant son orientation en fonction de la direction de traction.
- le moyen de traction comprend une paire de câbles.
- les câbles sont de longueur fixe.
- lorsque les deux structures flottantes sont arrimées, la deuxième structure se situe essentiellement dans l'emprise de la première structure, le moyen de traction opérant entre la région avant de la deuxième structure et l'équipage mobile.
- la deuxième structure agit mécaniquement sur l'angle du safran de la première structure lors d'un virage, permettant ainsi d'opérer un virage plus court.
- la première structure comprend à l'arrière un arceau en forme de « U », le dispositif d'arrimage des deux structures de façon séparable comprend un moyen de retenue dans une direction avant-arrière de la deuxième structure par rapport à la première, apte à relier la deuxième structure à l'arceau de la première structure, et, lorsque les deux structures sont arrimées, la deuxième structure se situe dans l'emprise de l'arceau et est apte à tracter la première structure via le moyen de retenue avant-arrière.
- l'arceau a la forme d'un arc-de-cercle dont le centre est situé devant la deuxième structure.
- l'arceau a la forme d'un arc-de-cercle dont le centre est situé au centre de la deuxième structure.
- la partie arrière de l'arrimage entre la deuxième structure flottante et l'arceau peut se mouvoir latéralement sur l'arceau.
- la partie arrière ne peut pas se mouvoir latéralement sur l'arceau lorsque la deuxième structure exerce une force de traction significative sur l'arrimage.
- l'arceau peut se mouvoir latéralement en pivotant autour d'un axe vertical.
- la superstructure (ST1) est inclinée vers l'avant de sorte à opposer moins de résistance au vent.
- un plancher est suspendu à la superstructure (ST1), des batteries électriques servant de contrepoids pour rééquilibrer le plancher automatiquement en les déplaçant sur des rails.
- les moyens pour assembler les deux structures flottantes de façon séparable comprennent un dispositif d'assemblage comprenant des moyens de suspension de la deuxième structure flottante à l'ossature de la première structure flottante, le dispositif d'assemblage permettant de maximiser la surface de l'agencement photovoltaïque en permettant de couvrir entièrement la surface de l'ensemble avec des panneaux solaires.
- le dispositif d'assemblage comprend des moyens de retenue dans une direction avant-arrière de la deuxième structure flottante par rapport à la première structure flottante.
- le dispositif d'assemblage comprend des moyens de retenue latérale de la deuxième structure flottante par rapport à la première structure flottante.
- le dispositif d'assemblage comprend des moyens de retenue haut-bas de la deuxième structure flottante par rapport à la première structure flottante.
- les moyens de suspension ou de retenue comprennent des sangles.
- certaines sangles s'étendent en oblique vers l'arrière, de la deuxième structure flottante vers la première structure flottante.
- les moyens de suspension ou de retenue sont aptes à réaliser un accrochage de la deuxième structure flottante à une superstructure de la première structure flottante portant un toit supportant l'agencement photovoltaïque.
- la première structure flottante et/ou la deuxième structure flottante comprend des hydrofoils.
- les flotteurs de la première structure flottante sont articulés sur l'ossature autour d'axes généralement parallèles un axe longitudinal de ladite structure, et comportent des roues débordant des flotteurs vers le bas dans une certaine position angulaire des flotteurs.
- l'ensemble comprend des moyens de blocage angulaire des flotteurs dans une position de navigation et dans une position de roulage, respectivement.
- chaque flotteur de la première structure comprend un caisson, et la première structure flottante comprend des moyens pour sélectivement remplir d'eau ou d'air chacun des caissons.
- l'agencement de panneaux photovoltaïques de la première structure comprend des panneaux mobiles pouvant être sélectivement déployés.
- un plancher est suspendu à l'ossature articulée de la première structure flottante, des batteries électriques servant de contrepoids pour rééquilibrer le plancher automatiquement en les déplaçant sur des rails.
- un propulseur électrique provoque, lors de la prise d'un virage, une rotation de la coque d'un certain angle autour d'un axe généralement parallèle à sa trajectoire, et l'ossature comprend un ensemble articulé ayant la forme d'un parallélogramme dont les angles varient selon ledit angle de rotation, entrainant une rotation d'un même angle pour toutes les coques de l'ensemble.
- l'ossature comprend des articulations placées sur des lignes parallèles, dans des plans verticaux perpendiculaires à la trajectoire de l'ensemble, les lignes étant verticales lorsque les coques ne sont pas inclinées latéralement et l'angle des lignes par rapport à la verticale variant selon l'angle de rotation des coques, la deuxième structure pouvant être assemblée avec la première sur des articulations placées sur une telle ligne dans chaque plan vertical, de façon à ce qu'une rotation de la coque de la deuxième structure autour d'un axe parallèle à sa trajectoire entraîne une rotation d'un même angle pour les coques de la première structure et réciproquement.
- lesdits angles varient selon l'angle d'une rotation provoquée par le propulseur électrique de la deuxième structure autour d'un axe généralement parallèle à sa trajectoire.
- lesdits angles varient selon l'angle des rotations provoquées par les propulseurs électriques de la première structure autour d'axes généralement parallèles à leur trajectoire.
- lesdits angles varient selon l'angle des rotations provoquées par les propulseurs électriques de la première et deuxième structures autour d'axes généralement parallèles à leur trajectoire.
- l'ensemble nautique comprend, sous les coques et au niveau des hélices, des hydrofoils provoquant une poussée latérale dont la force est fonction dudit angle de rotation.
- un plancher est suspendu à l'ossature articulée de la première structure flottante, des batteries électriques servant de contrepoids pour rééquilibrer le plancher automatiquement en les déplaçant sur des rails.
- la vue de dessus de la superstructure de la première structure flottante passe de la forme d'un rectangle à la forme d'un parallélogramme et la poussée latérale provoquée par les hydrofoil plus à l'extérieur par rapport au virage sont située plus à l'avant suite à cette transformation.
- la superstructure en parallélogramme porte le toit qui porte l'agencement photovoltaïque et ce dernier est composé de bandes de panneaux photovoltaïques qui glissent les unes par rapport aux autres de sorte à ce que la surface occupée par l'ensemble des bandes corresponde continuellement au parallélogramme lors dudit passage de la forme de rectangle à celui de parallélogramme.
- le passage de la forme d'un rectangle à la forme d'un parallélogramme est obtenu par des moyens électro-mécaniques.
- la première structure flottante comprend également au moins un propulseur électrique et le passage de la forme d'un rectangle à la forme d'un parallélogramme (Horizontal Parallelogram) est obtenu par une puissance plus élevée sur un propulseur propulsant une coque plus à l'extérieur par rapport au virage.

D'autres aspects, buts et avantages de la présente invention apparaîtront mieux à la lecture de la description détaillée suivante de plusieurs formes de réalisation de celle-ci, donnée à titre d'exemple non limitatif et faire en référence aux dessins annexés.
[Fig.1] est une vue de dessus schématique d'un ensemble selon une première forme de réalisation.
[Fig.2] est une vue de dessus schématique d'un ensemble selon une deuxième forme de réalisation.
[Fig.3] est une vue de dessus schématique d'un ensemble selon une troisième forme de réalisation.
[Fig.4] est une vue de dessus schématique d'un ensemble selon une quatrième forme de réalisation.
[Fig.6] est une vue de dessus schématique d'un ensemble selon une cinquième forme de réalisation.
[Fig.7] est une vue de dessus schématique d'un ensemble selon une sixième forme de réalisation.
[Fig.8] est une vue de dessus schématique d'un ensemble selon une septième forme de réalisation.
[Fig.9] montre différentes vues schématiques d'un ensemble selon une huitième forme de réalisation.
[Fig.10] montre différentes vues d'un mécanisme d'accroche sur l'arceau (U-bar) selon la huitième forme de réalisation de l'invention.
[Fig.11 à 15] montrent les étapes de manoeuvre pour la septième forme de l'invention.
[Fig.16] montre différentes vues schématiques d'une variante à la huitième forme de réalisation présentée à la figure 9.
[Fig.17] est une vue de dessus schématique d'un ensemble selon une dixième forme de réalisation.
[Fig.18] montre différentes vues schématiques d'un ensemble selon une onzième forme de réalisation.
[Fig.19] est une vue de côté schématique d'un ensemble selon une douzième forme de réalisation.
[Fig.20] est une vue de dessus schématique d'un ensemble selon une treizième forme de réalisation, avec sa superstructure mais sans son toit.
[Fig.21] est une vue de dessus schématique de l'ensemble de la figure 20, sans sa superstructure.
[Fig.22] est une vue de face de l'ensemble des figures 20 et 21.
[Fig.23] est une vue de côté de l'ensemble des figures 20 à 22.
[Fig.24] est une vue de dessus schématique de l'ensemble des Figures 20 à 22 avec un agencement particulier d'un toit doté de panneaux photovoltaïques.

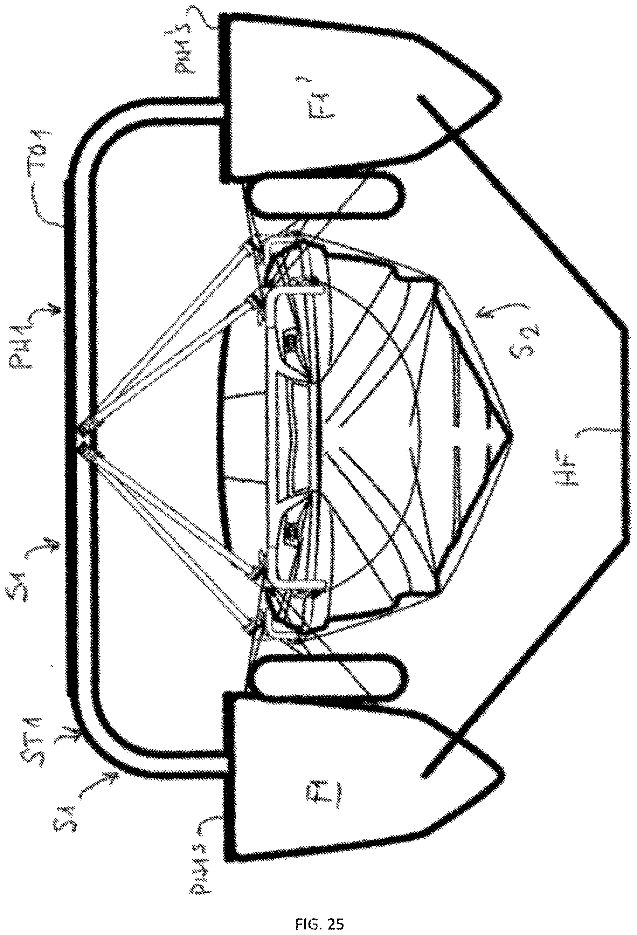

[Fig.25] est une vue de face d'une variante de l'ensemble des figures 20 à 24.
[Fig.26] est une vue de dessus partielle de la première structure flottante de l'ensemble de la Figure 25.
[Fig.27] est une vue de côté de l'ensemble des figures 25 et 26.
[Fig.28] est une vue de face d'un ensemble selon une quatorzième forme de réalisation de l'invention, dans un premier état de la première structure.
[Fig.29] est une vue de face partiellement arrachée de l'ensemble de la figure 28, dans le même premier état.
[Fig.30] est une vue de face semblable à celle de la figure 29, l'un des flotteurs étant dans un état intermédiaire.
[Fig.31] est une vue de face semblable à celle de la figure 29, dans un deuxième état de la première structure.
[Fig.32] est une vue de dessus d'un ensemble selon une quinzième forme de réalisation.
[Fig.33] est une vue de côté de l'ensemble de la figure 32.
[Fig.34] est une vue de face en perspective d'un ensemble selon une seizième forme de réalisation.
[Fig.35] est une section vue de dessus de l'ensemble de la figure 34.
[Fig.36] est une vue de face d'un ensemble selon une dix-septième forme de réalisation montrant que la forme normalement rectangulaire de la section de l'ossature articulée (Parallelogram) prend la forme d'un parallélogramme suite à la rotation des coques.
[Fig.37] montre différentes vues schématiques d'une première structure selon la dix-septième forme de réalisation.
[Fig.38] montre les mêmes vues que la figure 37 mais avec une première structure assemblée avec la deuxième structure.
[Fig.39] montre la première structure de la figure 37 mais avec un plancher suspendu auto-équilibré.
[Fig.40] illustre l'auto-équilibrage du plancher auto-équilibré de la figure 37.
[Fig.41] présente schématiquement une section d'un plancher auto-équilibré tel que celui des figures 39 et 40, en détaillant le socle et le sol.
[Fig.42] présente schématiquement une variante au plancher de la figure 41, dans laquelle le sol est supendu au socle plutôt que directement à la superstructure.

Un ensemble selon l'invention comprend deux structures flottantes S1 et S2. On notera à titre préliminaire que, dans la mesure du possible, des signes de référence se terminant par « 1 » désignent des éléments ou parties appartenant à la structure S1, tandis que des signes de référence se terminant par « 2 » désignent des éléments ou parties appartenant à la structure S2. Par ailleurs, d'une figure à l'autre, des éléments identiques ou similaires sont désignés par les mêmes signes de référence dans la mesure du possible, et ne seront pas décrits à nouveau à chaque fois. En outre, afin de clarifier, on fait parfois référence à des signes de référence qui ne sont pas notés, mais sont évidents en regardant les dessins.

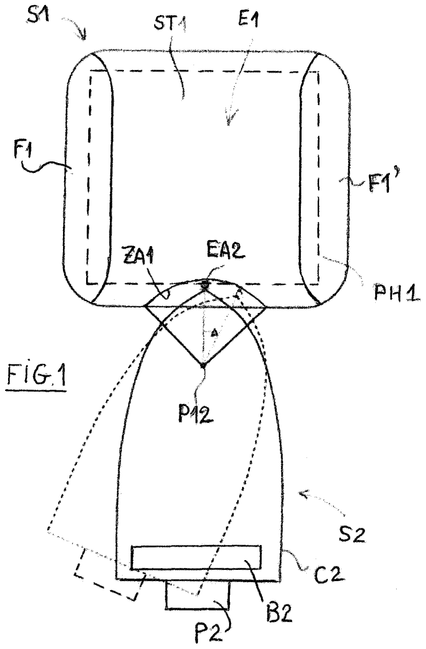

Sur les figures 1 à 3, on désigne par la référence S1 une première structure flottante, ici de type catamaran, avec une superstructure ST1 et deux flotteurs F1, F1' laissant entre eux un espace E1 entre la superstructure ST1 et le niveau de l'eau.

La superstructure et l'intérieur des flotteurs peuvent comporter tous aménagements de vie, de couchage, de travail, etc.

On désigne par la référence S2 une deuxième structure flottante, d'emprise généralement plus petite et capable de s'engager au moins partiellement dans l'espace entre les flotteurs F1, F1'.

Cette structure ici de type monocoque (il pourrait également s'agir d'un catamaran plus petit) avec une coque C2, un propulseur électrique P2 de tout type approprié, et une batterie B2 (le terme « batterie » couvrant également un ensemble de batteries), réparties de façon appropriée dans la structure S2.

La structure flottante S1 peut également comprendre, optionnellement, sa propre batterie et son propre propulseur.

En référence particulière à la figure 1, la structure S2 peut être arrimée de façon libérable à la structure S1 au niveau d'un pivot P12 situé en arrière de la structure S1 et dans la région avant de la structure S2, de telle sorte que l'avant de la structure S2 soit partiellement engagé dans l'espace E1.

L'arrimage des deux structures comprend également un élément d'appui EA2 de la structure S2 sur une zone d'appui ZA1 de la structure S1, agencée selon un arc de cercle centré sur le pivot P12, de telle sorte que lorsque l'inclinaison de l'axe de la structure S2 par rapport à l'axe de la structure S1 change, l'élément d'appui EA2 se déplace horizontalement le long de la zone d'appui ZA.

Dans une première forme de réalisation, l'élément d'appui EA2 est constitué par une roue dentée, et la zone d'appui est constituée par une crémaillère. Un moteur prévu en association avec la roue dentée EA2 permet de faire tourner celle-ci, de manière à faire varier à la demande l'inclinaison entre les axes des deux structures. Pour une poussée axiale du propulseur P2, une inclinaison mutuelle des axes des deux structures va pouvoir faire tourner l'ensemble dans une direction ou dans l'autre lors de la navigation. On notera que la poussée se transmet ici soit par le pivot P12, soit par la coopération élément d'appui/zone d'appui, soit encore de façon répartie entre les deux.

Selon une autre forme de réalisation, la liaison entre l'élément d'appui EA2 et la zone d'appui ZA1 est à glissement libre, ou à roulement libre, et le pilotage de l'ensemble est réalisé en asservissant la direction de poussée du propulseur P2 à une mesure de l'inclinaison mutuelle entre les axes des deux structures, et en prenant en compte une direction de consigne.

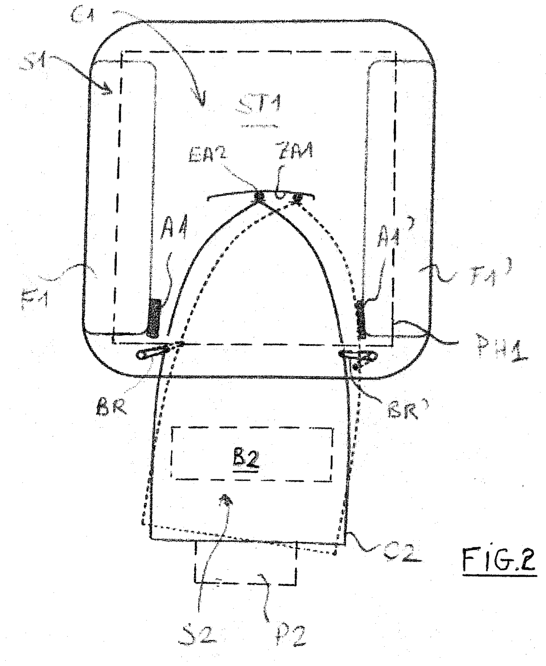

En référence maintenant à la figure 2, l'arrimage entre les structures S1 et S2 s'effectue à l'aide d'une part d'un élément d'appui EA2 qui est capable de glisser ou de rouler avec une résistance mécanique limitée le long d'une zone d'appui ZA1 solidaire de la structure S1 et qui est ici généralement lisse.

On observe par ailleurs que la zone d'appui ZA1 est située beaucoup plus vers l'avant de la structure S1 que dans le cas de la figure 1.

La commande de l'inclinaison mutuelle des structures S1 et S2 s'effectue à l'aide de bras latéraux motorisés BR, BR' opérant entre l'arrière de la structure S1 et les côtés de la structure S2, la commande de ces bras en synchronisme permettant de faire tourner la structure S2 par rapport à la structure S1 en réalisant la combinaison d'un mouvement de rotation (pour faire tourner la coque C2) et de translation (pour absorber les changements de longueur qui en résultent).

Lors des variations d'inclinaisons, l'élément d'appui EA2 se déplace librement le long de la zone d'appui ZA1. C'est entre ces deux organes que se transmet la poussée de la structure S2 sur la structure S1.

On observe que dans cette réalisation, des amortisseurs A1, A1' prévus sur la structure S1 et par exemple en élastomère ou en mousse, permettent d'amortir les éventuels chocs entre les coques des deux structures, notamment pendant les phases d'arrimage et de désarrimage.

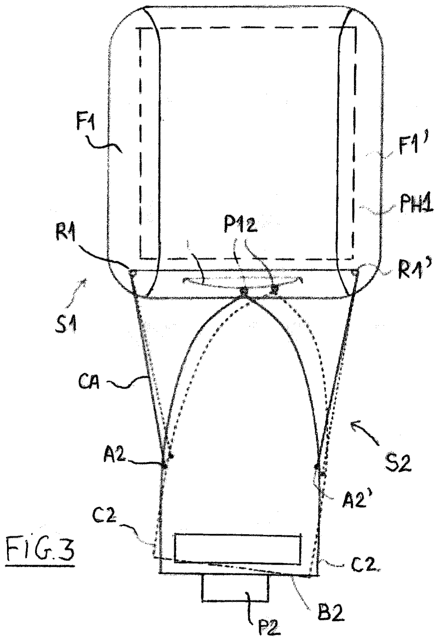

L'ensemble de la figure 3 opère selon un principe semblable à celui de la figure 2, à ceci près que la structure S2 se place sensiblement plus en arrière lors de l'arrimage, et que la commande de changement d'inclinaison s'effectue à l'aide d'un câble CA dont les mouvements sont commandés à l'aide d'un système motorisé à bord de la structure S1, câble qui est relié à des points d'attache A2, A2' sur les côtés de la coque C2. En fonction de la configuration statique et dynamique du câble CA, la zone d'appui ZA1 qui reçoit la poussée de l'élément d'appui EA1 et contre laquelle celle-ci peut glisser librement peut être convexe (comme illustré), ou encore rectiligne ou concave comme dans le cas précédent.

En variante, on peut prévoir un jeu de deux câbles ou davantage, commandés en synchronisme.

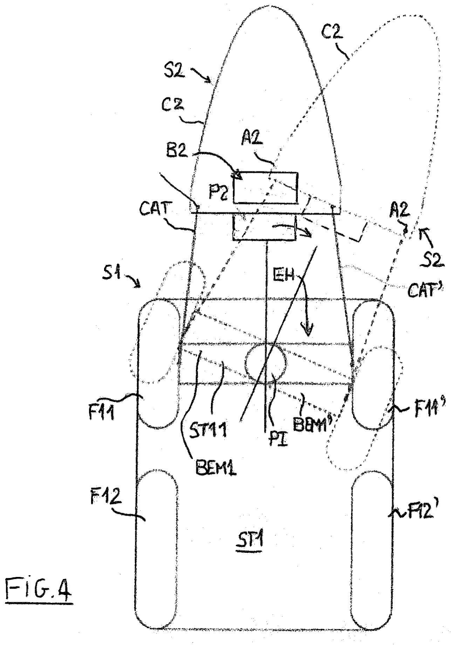

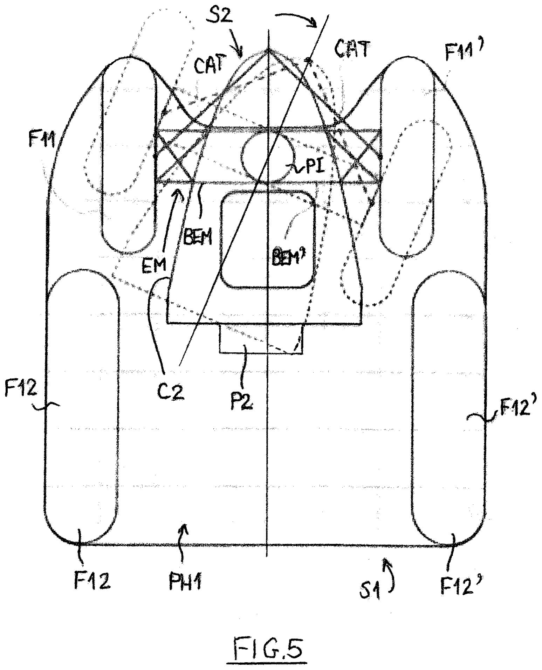

Les figures 4 et 5 illustrent deux formes de réalisation où la structure flottante S2 agit en traction sur la structure flottante S1.

Dans ces formes de réalisation, la structure S1 comprend deux paires de flotteurs, à savoir une paire de flotteurs fixes F12, F12' disposés à l'arrière, et une paire de flotteurs déplaçables F11, F11' disposés à l'avant.

Ces flotteurs déplaçables sont montés sur un équipage mobile EM apte à pivoter par rapport à la superstructure fixe ST1 de la structure S1 autour d'un pivot PI situé sensiblement à la hauteur des flotteurs F11, F11' dans la direction avant-arrière, cet équipage mobile comprenant deux bras rigides BEM1, BEM1' reliant le pivot PI aux flotteurs.

L'arrimage entre les structures S1 et S2 est effectuée par des câbles de traction CAT, CAT' qui, côté structure S1, sont attachés à l'équipage mobile de part et d'autre du pivot PI et, côté structure S2, sont attachés sur le tableau arrière de celle-ci, de façon espacée latéralement. Ces câbles sont ici de longueur fixe.

De la sorte, les changements de direction de la structure S2, causés par les changements de la direction de poussée du propulseur P2, provoquent un changement de direction dans la même direction de l'équipage mobile EM, et la structure S1 est donc capable d'épouser une courbe en suivant de façon régulière la structure S1 lors de la navigation.

Dans la forme de réalisation de la figure 5, la structure S2 est située pratiquement dans son intégralité dans l'emprise de la structure S1, et les câbles de traction CAT s'étendent non plus à partir de l'arrière de la structure S1, mais à partir de son étrave. On observe également que la distance entre les flotteurs déplaçables F11, F11' est plus petite que la distance entre les flotteurs fixes F12, F12', ce qui confère à la structure S1 une plus grande maniabilité lors des virages.

Dans tous les formes de réalisation, on prévoit avantageusement que l'arrimage entre les structures S1 et S2 permettent d'accepter un différentiel d'attitude des deux structures en tangage, en roulis ainsi qu'en translation verticale.

Selon la forme de réalisation ces moyens peuvent comprendre des liaisons à rotule, des cardans, des glissières verticales, etc.

Par ailleurs, la connexion électrique entre la circuiterie des éléments photovoltaïques PH1 et la ou les batteries B2 peut se faire par tout moyen approprié (non représenté mais bien connu de l'homme de l'art), et notamment à l'aide de connecteurs et de câbles intimement associés aux organes d'arrimage pour faciliter les opérations.

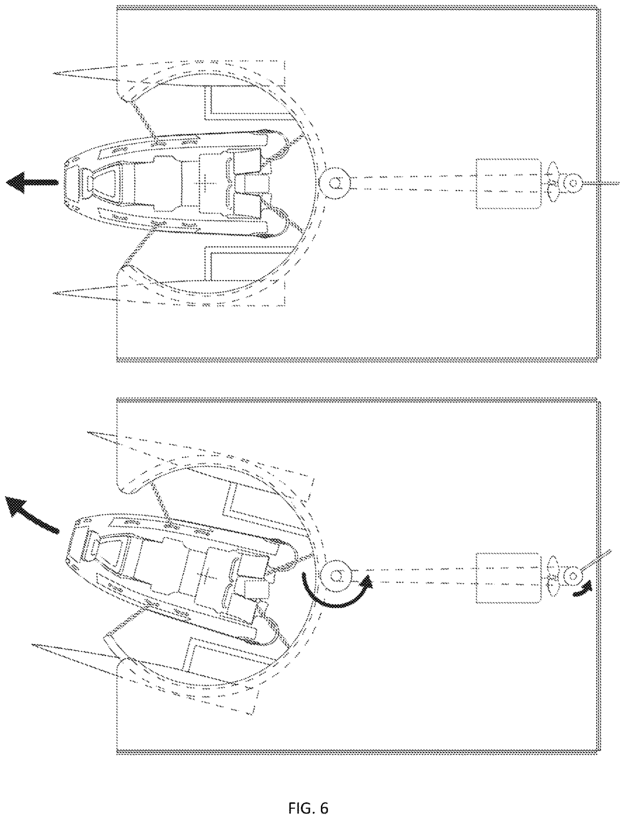

La figure 6 présente un perfectionnement de l'ensemble schématiquement montré à la figure 5, selon lequel la structure S2 agit mécaniquement sur l'angle du safran (rudder) de la structure S1 lorsqu'elle prend un virage, facilitant ainsi le virage.

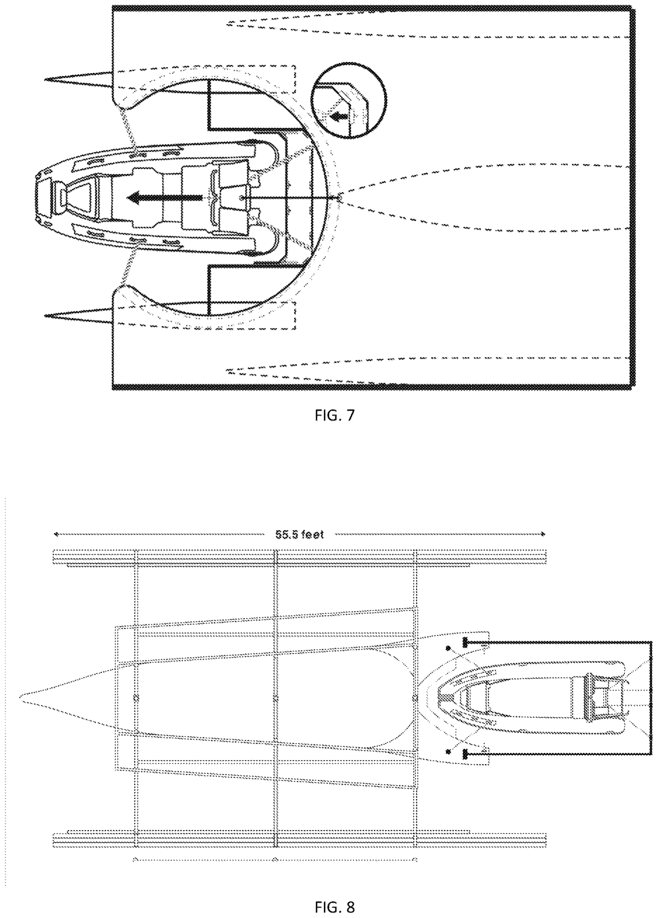

La figure 7 présente un même type d'ensemble que celui de la figure 6 mais avec en plus un fusible mécanique apte à se déclencher lorsque la structure S2 exerce une force de traction trop importante sur la structure S1. Lorsque le fusible mécanique se déclenche la structure S2 tire la structure S1 par un point fixe de cette dernière. La structure S2 se remet (s'enclenche, se « plug ») dans l'ossature automatiquement lorsqu'il tourne à nouveau. Ce mécanisme de fusible mécanique permet une ossature plus légère pour la structure S1.

Selon d'autres formes de réalisation, on peut utiliser les solutions d'arrimage décrites jusqu'ici pour déplacer des structures flottantes S1 de type trimaran, et en particulier des structures de type « bancas » philippins équipées de panneaux photovoltaïques, la structure S2 se plaçant à l'avant ou à l'arrière de la structure de banca philippin S1.

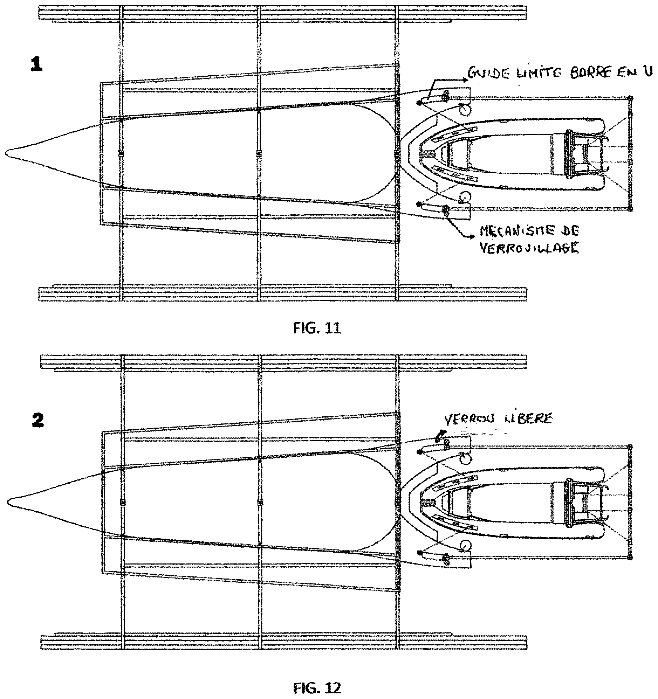

La figure 8 présente schématiquement un structure S1 trimaran (ici de forme banca philippin), la structure S2 étant placée à l'arrière et tirant la structure S1 à partir d'un arceau rectangulaire « U-bar », ce dernier étant relevable par rotation (autour de points placés sur une extension du banca philippin, à l'arrière de celui-ci). Lorsque l'arceau U-bar est relevé, la structure S2 peut rentrer et sortir et, lorsqu'elle est remise (c'est-à-dire placée à nouveau à horizontale), la structure S2 peut être arrimée avec l'arceau U-bar afin de pourvoir tirer la structure S1. La figure 8 présente l'arceau U-bar en position « de croisière », plus loin les figure 11 à 15 montrent l'arceau U-bar dans différentes étapes de manoeuvre.

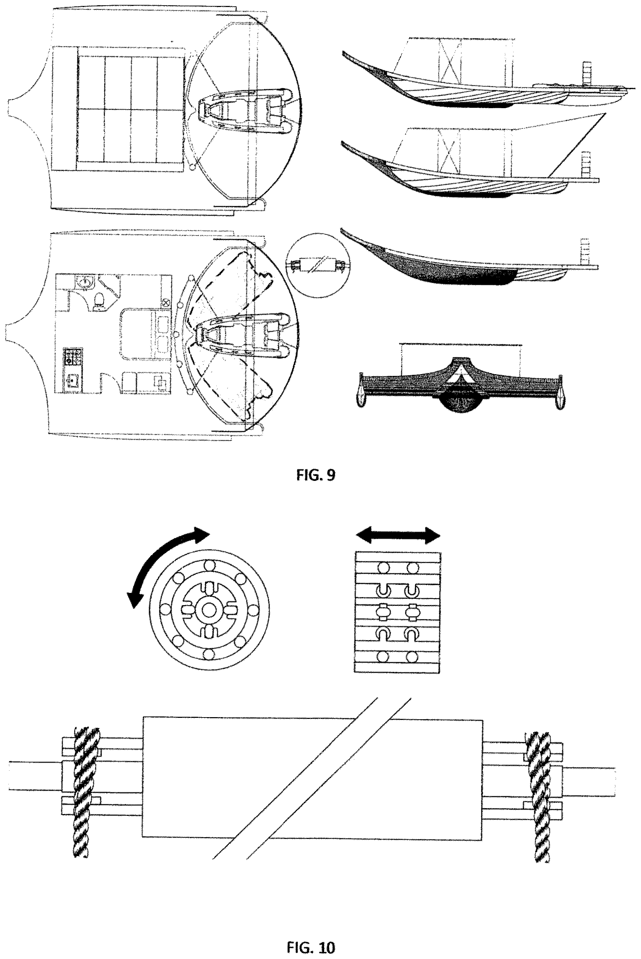

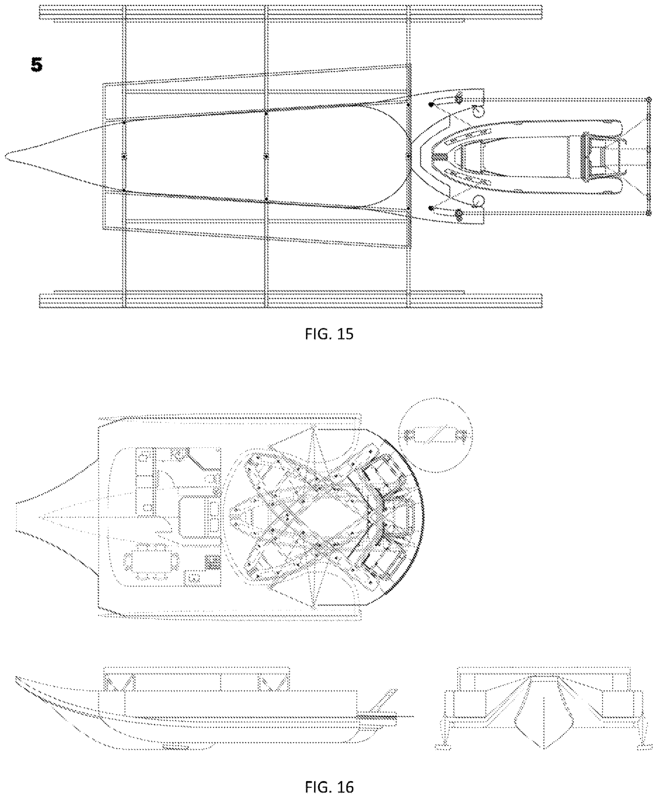

La figure 9 présente une structure S1 trimaran et une structure S2 placée à l'arrière de la structure S1 et la tirant à partir d'un arceau « U-bar » en arc-de-cercle. Le but visé ici est le suivant : pour prendre un virage, que la structure S2 puisse se positionner de manière optimale en faisant « glisser » son arrimage à la structure S1, le long de l'arceau U-bar, c'est-à-dire en effectuant une rotation dans le plan horizontal. Ici le centre de rotation (où est situé l'axe vertical autour duquel la rotation est effectuée) est situé devant la structure S2 ; on verra plus loin, à la figure 16, que le centre de rotation peut avantageusement être situé au centre de la structure S2.

On voit à droite de cette figure l'arceau U-bar lorsqu'il est relevé et la structure S2 n'est pas dans l'arceau U-bar.

Lors d'une manoeuvre, la structure S2 peut prendre un angle par rapport à l'axe principal de la structure S1 pour le faire tourner plus efficacement.

Avantageusement, l'arrimage qui tire l'arceau U-bar peut librement rouler (latéralement) sur l'arceau U-bar sauf quand la structure S1 tire l'arceau U-bar avec une force significative. Ainsi la structure S2 peut changer son angle par rapport à l'axe principal de la structure S1 lorsqu'il décélère. En outre, la technologie des ceintures de sécurité des voitures (enrouleur + organes d'accrochage + blocage en cas de mise sous tension brutale) est utilisée pour ne laisser les cordes rouler sur les poulies montrées dans les figures que seulement s'il n y a pas d'à-coups.

L'idée ici est de ne laisser initier une manoeuvre (c'est-à-dire laisser rouler l'arrimage sur le U-bar en arc de cercle) que si la structure S2 ne tire pas la structure S1 fortement et qu'il n'y a pas d'à-coups. Le conducteur de la structure S2 peut ainsi distinguer
1. l'étape "initier une manoeuvre" de tourner le moteur pour prendre un angle (mais sans accélérer fortement), de
2. l'étape de tourner le moteur (en sens inverse cette fois-ci) pour accélérer en faisant tourner l'ensemble.

La figure 10 présente un détail de l'arrimage de la structure S2 avec l'arceau U-bar (correspondant au détail montré à la figure 9 dans un cercle), mis-en-oeuvre sous la forme d'un mécanisme appelé « accroche » dans la suite, qui empêche l'arrimage de se déplacer latéralement lorsque la structure S2 tire avec une force de traction significative, mais le laisse se déplacer latéralement pour effectuer une manoeuvre.

On voit dans la figure 10 des petites roues permettant à l'accroche de se déplacer latéralement sur l'arceau U-bar et des roulements à bille lui permettant de librement tourner autour de l'arceau U-bar.

Pour débuter une manoeuvre ayant comme but de faire tourner la structure S1 d'un certain côté, le conducteur de la structure S2 effectue les étapes suivantes :
1) décélère (pour qu'il n'y ait plus une force de traction significative) ;
2) accélère, mais pas trop, pour que l'accroche puisse se déplacer latéralement sur le U-bar, en tournant le moteur du côté inverse à ce qu'il ferait normalement, ceci afin de positionner la structure S2 du côté le plus avantageux pour tourner l'ensemble ;
3) accélère en tournant le moteur en sens inverse (pour faire avancer l'ensemble en tournant), puis, lorsque le virage est complété ;
4) décélère et effectue l'inverse de l'étape 2 pour repositionner l'accroche au milieu du U-bar (c'est-à-dire repositionner la structure S2 dans l'axe principal de la structure S1).

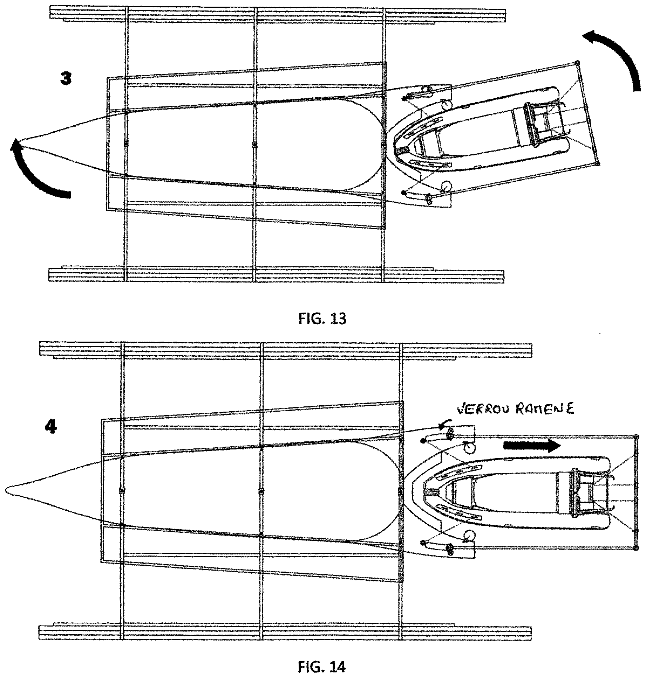

La figure 11 présente un mécanisme de manoeuvre en utilisant l'arceau U-bar rectangulaire de la figure 8. L'accroche de ce dernier sur la structure S1 peut glisser au début d'une manoeuvre. Un loquet est déverrouillé pour le permettre, comme montré à la figure 12. Ensuite, le conducteur de la deuxième structure tourne le moteur (propulseur) tout d'abord dans le sens inverse de ce qu'il ferait normalement pour le virage qu'il entend faire prendre à l'ensemble et le fait fonctionner jusqu'à que l'arceau se positionne pour prendre ledit virage, comme montré à la figure 13 ; ensuite le tourne en sens inverse c'est-à-dire le positionne comme normalement pour prendre ce virage et le fait fonctionner jusqu'à que le virage soit complètement effectué. Finalement, comme montré à la figure 14, le conducteur de la deuxième structure fait fonctionner le moteur en marche arrière pour remettre l'arceau U-bar en position de croisière (Fig. 15).

La figure 16 présente une variante de l'ensemble présenté à la figure 9, dans laquelle le centre de rotation (autour d'un axe vertical) est situé au centre de la structure S2 (plutôt que devant la structure S2). Cette variante est avantageuse en ce qu'elle permet d'intégrer dans l'emprise de la structure S1 une structure S2 plus grande.

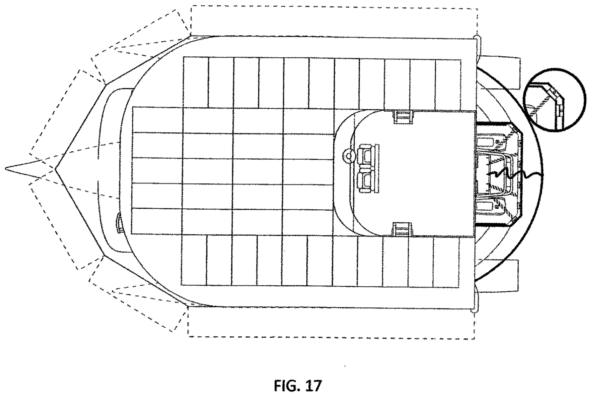

La figure 17 présente un ensemble comprenant deux arceaux U-bar, le premier étant doté d'un fusible mécanique et le second permettant de retenir la structure S2 dans le cas où le fusible mécanique se déclenche et fait que la structure S2 n'est plus retenue par le premier.

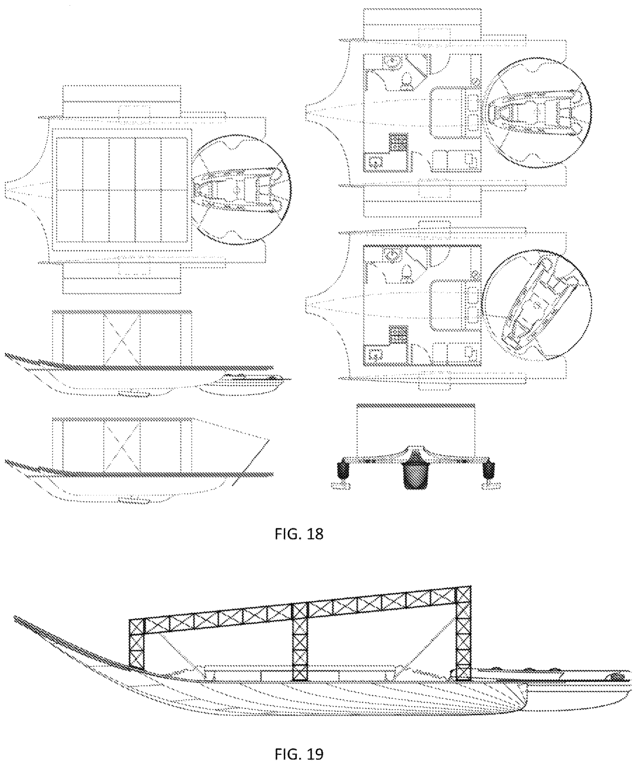

La figure 18 présente un arceau U-bar en forme de cercle quasi complet.

Enfin, la figure 19 illustre une conception de la superstructure (ST1) de la première structure dans laquelle le toit solaire est non-horizontal, afin d'opposer moins de résistance au vent.

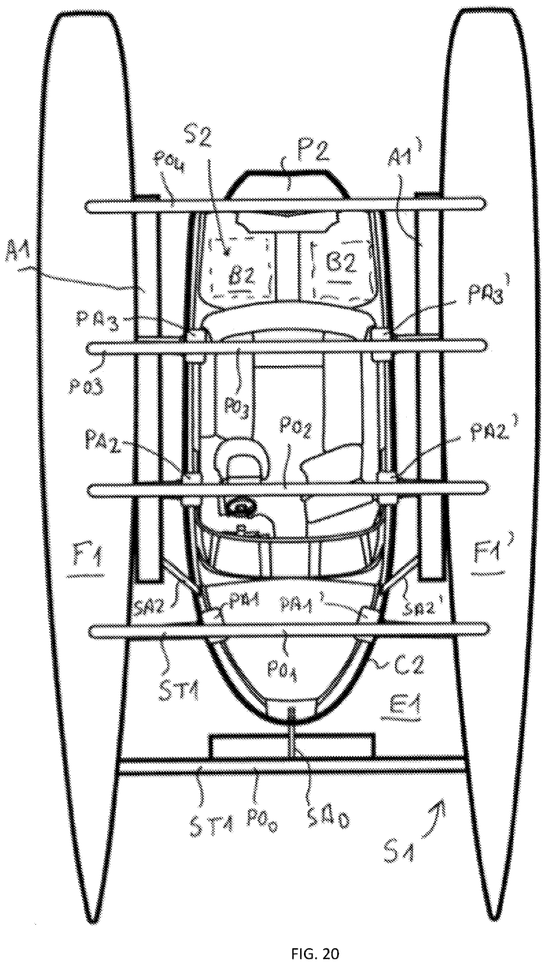

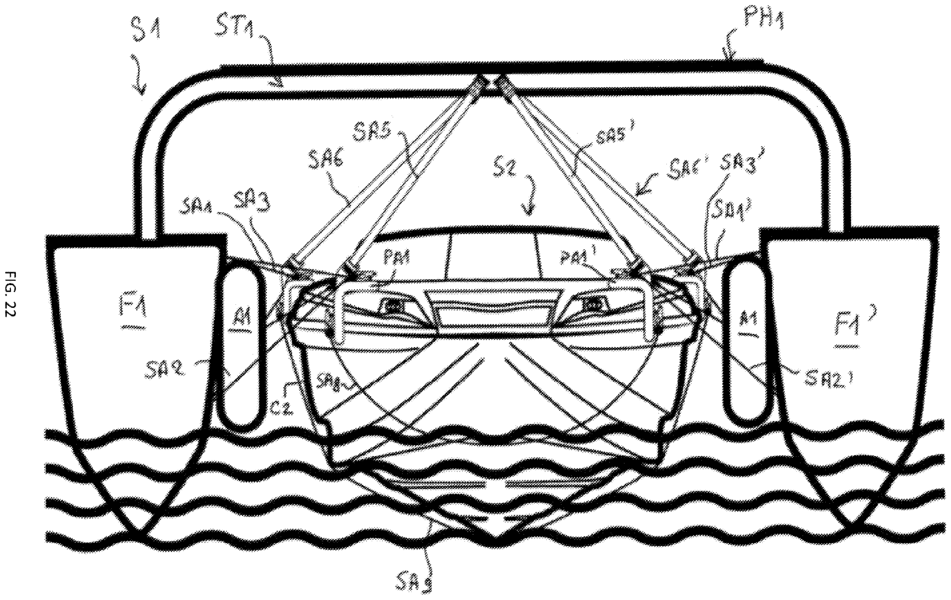

Sur les Figures 20 à 23, on désigne encore par la référence S1 la première structure flottante, avec une superstructure ST1 et deux flotteurs F1, F1' laissant entre eux un espace E1 entre la superstructure ST1 et le niveau de l'eau, espace dans lequel la structure S2 peut être arrimée. La superstructure ST1 et l'intérieur des flotteurs peuvent encore comporter tous aménagements de vie, de couchage, de travail, etc. La superstructure ST1 comprend un ensemble de quatre poutres transversales, respectivement PO0 à PO4 reliant les flotteurs F1 et F1' ensemble de façon rigide. La poutre PO0 s'étend à la hauteur des flotteurs dans la région avant de ceux-ci, tandis que les poutres PO1 à PO4 sont en forme générale de U retourné et s'étendent à un niveau situé plus haut que les sommets des deux flotteurs.

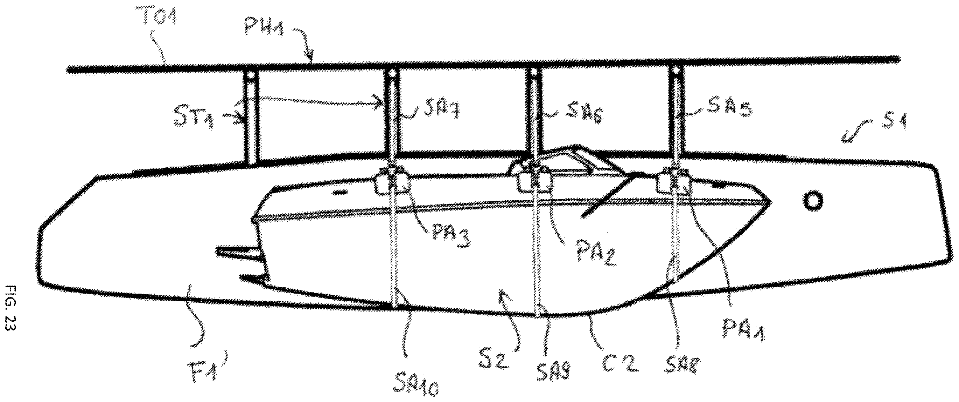

Comme visible en particulier sur la Figure 23, la structure S1 comporte sur une structure formant un toit TO1, solidarisé à la superstructure ST1, un ensemble de panneaux photovoltaïques PH1 couvrant ici l'ensemble de son étendue.

La structure S2 peut être arrimée de façon libérable à la structure S1 d'une part par un dispositif de suspension et d'autre part par un dispositif retenue latérale.

Le dispositif de suspension comprend un premier jeu de sangles SA5-SA7 et SA5'-SA7', respectivement, qui sont accrochées aux poutres PO1 à PO3 dans leur région centrale, à l'aide de crochets appropriés, et qui relient ces crochets à des jeux de patins latéraux PA1-PA3 et PA1'-PA3' respectivement. Ces patins présentent une section transversale en forme générale en forme de L et qui s'étendent au niveau de la transition entre le pont de la structure S2 et de sa coque C2 en y étant rapportés de façon libre.

Ces patins comprennent de préférence des aménagements (mousse, élastomère, etc.) destinés à éviter de détériorer les surfaces de la structure S2.

Le dispositif de suspension comprend un deuxième jeu de sangles SA8 à SA10 s'étendant au-dessous de la structure S2, le long de sa coque C2, entre deux patins situés au même niveau dans le sens avant-arrière (voir en particulier Figure 23).

A l'aide d'un jeu de tendeurs de sangles TS de type connu en soi, les sangles du dispositif de suspension peuvent être mises sous tension de façon à accrocher la structure S2 à la structure S1 au niveau des régions centrales des poutres PO1 à PO3 de la superstructure ST1 appartenant à la structure S1, les patins jouant le rôle de liaison entre les sangles supérieures SA5 à SA7 et SA5' à SA7' et les sangles inférieures SA8 à SA10.

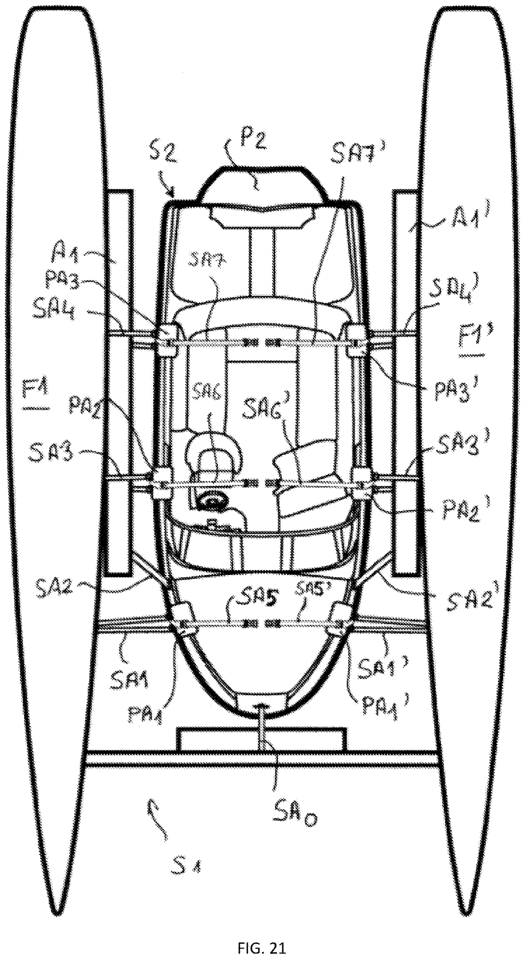

La liaison entre les deux structures S1 et S2 comprend également un dispositif de retenue latérale comprenant ici encore un jeu de sangles SA0, SA1 à SA4 et SA1' à SA4' (voir en particulier Figure 21).

La sangle SA0 s'étend entre la proue de la structure S2 et la poutre avant PO0, essentiellement horizontalement et selon l'axe de navigation des structures.

Une paire de sangles SA1, SA1' s'étendent à partie de la région avant de la structure S2, à proximité des patins PA1, PA1' respectivement (ou à partir des patins en question), en biais vers l'arrière en direction des deux flotteurs qui comportent des agencements d'accrochage appropriés.

Trois autres paires de sangles SA2, SA2', SA3, SA3' et SA4, SA4' s'étendent entre les patins respectifs, PA1, PA2 et PA3 et PA1', PA2' et PA3', et les flotteurs respectifs F1 et F1', ces derniers comprenant des moyens d'accrochage adaptés sensiblement au droit des poutres PO1, PO2 et PO3.

On comprend que la mise en tension de ces sangles permet d'une part de transmettre à la structure flottante S1 la poussée exercée par le propulseur de la structure flottante S2 (principalement via les sangles SA1 et SA1' qui sont orientées en oblique et dimensionnées en conséquence), et d'autre part de stabiliser latéralement la structure S2 par rapport à la structure S1.

Comme c'est le cas en général, le propulseur est susceptible de faire effectuer à la deuxième structure une rotation d'un certain angle autour d'un axe parallèle à son axe longitudinal (c'est-à-dire autour d'un axe parallèle à sa trajectoire), et les sangles ont aussi pour effet de transmettre l'effort de rotation à l'ensemble.

On observe sur les Figures 20 et 21 des amortisseurs A1, A1' prévus sur la structure S1 et réalisés par exemple en élastomère ou en mousse ou par les mêmes techniques que des pare-battages, s'étendant le long des flotteurs F1 et F1' à l'intérieur de ceux-ci et permettant d'amortir les éventuels chocs entre les deux structures, notamment pendant les phases d'arrimage et de désarrimage.

L'arrimage de la structure S2 à la structure S1 s'effectue par les étapes suivantes
- engagement de la structure S2 dans l'espace E1 entre les flotteurs de la structure S1 ;
- mise en place des jeux de patins sur la structure S2,
- mise en place des sangles inférieures SA8-SA10 sous la coque C2 de la structure S2 et accrochage des sangles aux paires de patins respectifs, et pré-serrage des sangles ;
- accrochage des sangles de suspension SA5-SA7 et SA5'-SA7' sur les patins respectifs et les crochets de poutres respectives, et pré-serrage,
- accrochage et pré-serrage de la sangle frontale SA0 et des sangles latérales SA1-SA4 et SA1'-SA4',
- serrage définitif des différentes sangles.

Le désarrimage s'effectue par les opérations inverses.

Selon une variante non représentée, les différentes sangles peuvent être combinées entre elles, en passant dans des passages de sangles appropriés, de manière à limiter le nombre d'opérations de serrage et faciliter l'arrimage et le désarrimage.

L'ensemble comprend également des moyens de connexion électrique entre les deux structures, permettant aux panneaux photovoltaïques de la structure S1 de charger les batteries de la structure S2. Ces moyens de connexion électriques peuvent être constitués par exemple d'un câble souple doté d'un connecteur approprié, appartenant à la structure S1, le connecteur étant engagé dans un connecteur complémentaire dans la coque ou le pont de la structure S2.

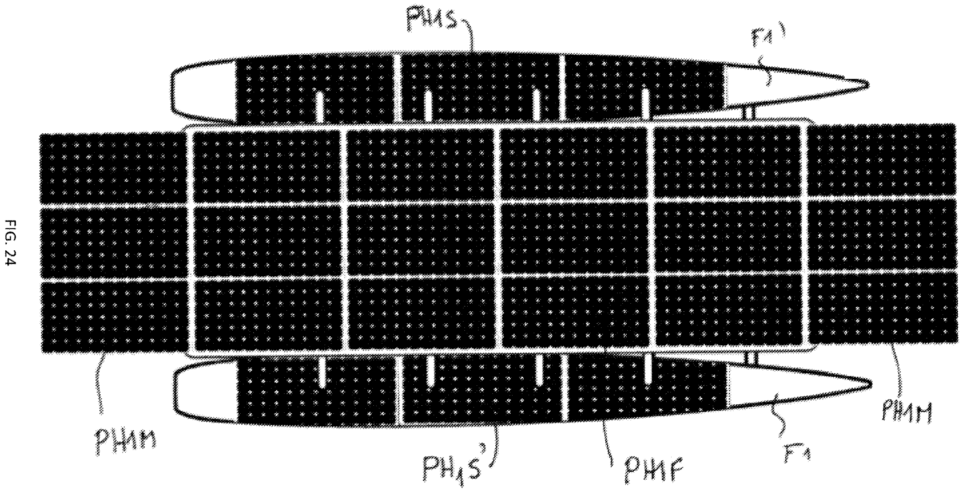

En référence maintenant à la Figure 24, on a représenté une structure perfectionnée pour les panneaux photovoltaïques équipant la structure flottante S1.

Ces panneaux PH1 comprennent un ensemble de panneaux fixes PH1F occupant ici l'essentiel du toit de la structure flottante, et un ensemble de panneaux mobiles PH1M fixés sur une structure mobile plane apte à être sélectivement escamotée sous la structure des panneaux fixes, ou déployée pour déborder des panneaux fixes et ainsi accroître la capacité de production électrique des panneaux.

Dans le présent exemple, la structure mobile est apte à être déployée vers l'avant et vers l'arrière par rapport à la structure fixe. Un déploiement latéral est également possible.

On peut prévoir également des panneaux photovoltaïques secondaires PH1S sur les flotteurs, comme illustré.

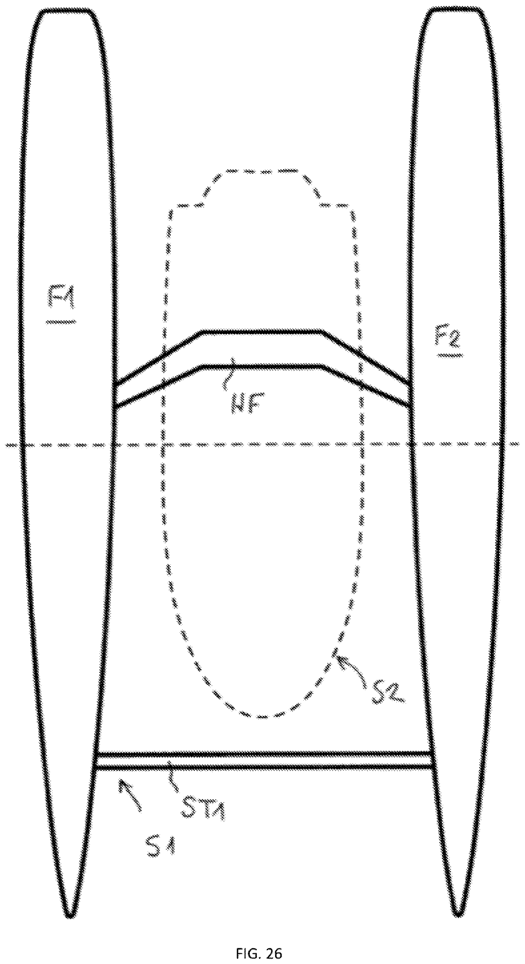

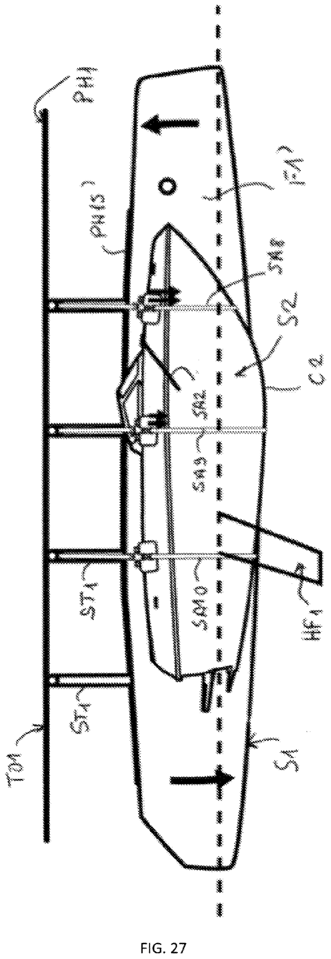

En référence maintenant aux Figures 26 et 27, on a représenté une variante de la treizième forme de réalisation où la structure flottante S1 est dotée d'un élément hydrodynamique de type hydrofoil HF, cet élément s'étendant entre les deux flotteurs F1 et F1' de façon à se situer sous l'eau pendant la navigation.

Cet élément hydrodynamique comprend une partie centrale horizontale et deux parties obliques latérales connectant la partie centrale aux flotteurs respectifs.

Avantageusement, on peut prévoir que la position de la structure S2 par rapport à la structure S1 soit ajustable, de manière à pouvoir ajuster, au cours de la navigation où le propulseur de la structure S2 assure la propulsion de l'ensemble, le cabrage de chacune des deux structures de manière à optimiser les conditions de navigation notamment en matière de résistance à l'avancement.

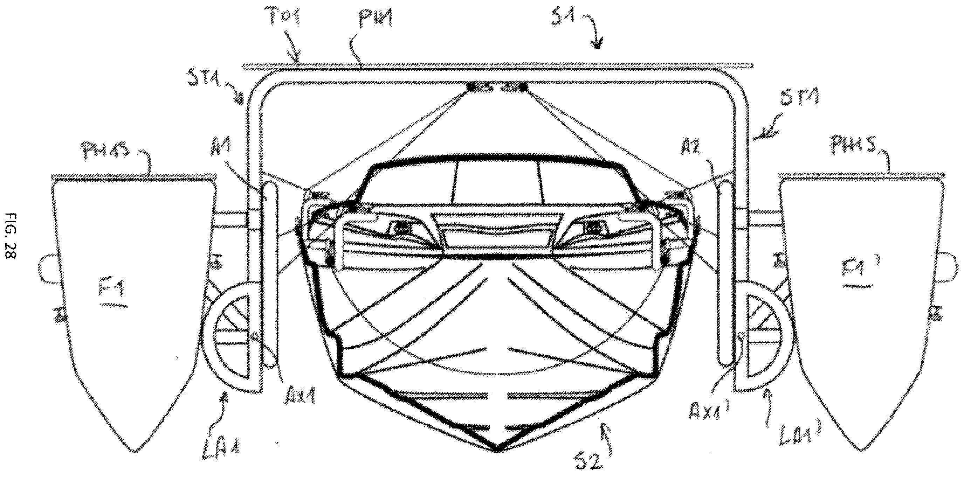

Les Figures 28 à 31 illustrent une quatorzième forme de réalisation de l'invention, selon laquelle les flotteurs F1, F1 de la première structure S1 sont conçus pour assurer le transport à terre de la seconde structure S2, toujours constituée ici d'un bateau monocoque conventionnel à propulsion électrique.

Dans cette forme de réalisation, chaque flotteur F1, F1' est relié à la superstructure ST1 par une liaison articulée, respectivement LA1 et LA1', l'articulation étant réalisée autour d'un axe, respectivement AX1 et AX1', parallèle à l'axe d'avancement de la structure S1. Cette liaison articulée comprend des moyens de verrouillage dans des positions angulaires déterminées comme on va le voir dans la suite.

Par ailleurs, chacun des flotteurs F1, F1' comprend un caisson étanche CE1, CE1', susceptible d'être sélectivement rempli d'eau ou d'air, par exemple par des moyens analogues à ceux utilisés pour les ballasts d'un sous-marin. A ces caissons sont ainsi associées des valves VA1, VA1' permettant de mettre leur espace intérieur en communication avec le milieu aquatique, et des circuits d'air comprimé CA1, CA1' permettant de remplir leur espace intérieur d'air à partir d'une source d'air comprimé (un compresseur, non représenté).

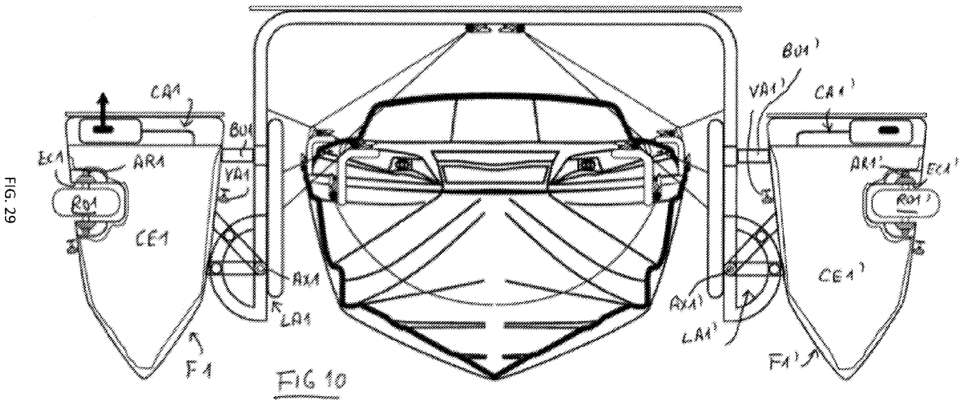

Chacun des flotteurs comporte par ailleurs une ou plusieurs échancrures latérales externes, respectivement EC1, EC1', formant (chacun) un logement pour une roue respective RO1, RO1' permettant de faire rouler l'ensemble formé des structures S1 et S2, la structure S1 portant la structure S2 à laquelle elle est suspendue, sur le rivage. Les roues sont orientées de telle sorte que, dans la position normale des flotteurs illustrée sur les Figures 28 et 29, elles tournent autour d'un axe de roue vertical respectif, respectivement AR1, AR1', en débordant d'une distance déterminée, latéralement, au-delà du bord extérieur du flotteur considéré.

La Figure 28 illustre l'ensemble en situation de navigation. Les caissons CE1, CE1' sont remplis d'air et assurent la flottaison de la structure S1, de la même manière qu'un catamaran traditionnel. Les liaisons articulées LA1, LA1' sont verrouillées pour que les flotteurs F1 et F1' forment avec la superstructure ST1 un ensemble rigide. Des bras de butée BU1, BUA' appliquant latéralement chaque flotteur F1, F1' contre une partie en vis-à-vis de la superstructure ST1 permet de limiter les efforts appliqués à la liaison articulée.

En référence à la Figure 29, les valves VA1, VA1' sont ouvertes pour permettre à l'eau de rentrer dans les caissons étanches CE1, CE1', l'air étant expulsé via des clapets appropriés prévus par exemple au niveau des circuits d'air comprimé.

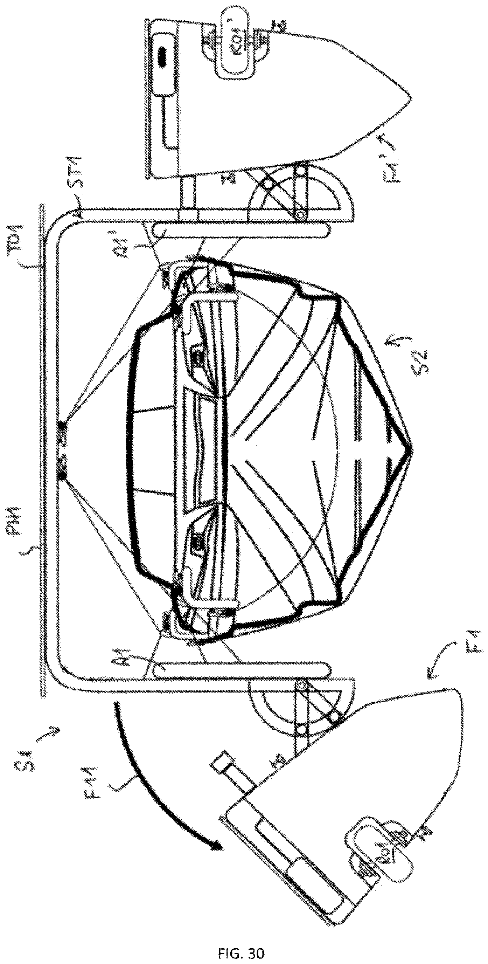

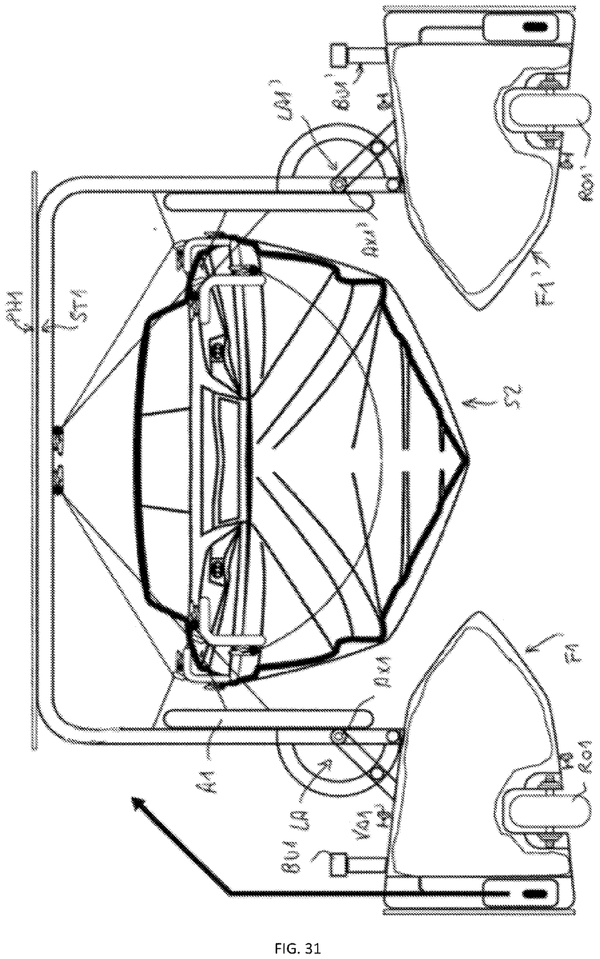

Au cours de cette phase (au début, à un moment intermédiaire ou à la fin), les verrous des liaisons articulées LA1, LA1' sont libérés et les flotteurs peuvent basculer (cf. flèche F11 sur la Figure 30), sous l'effet de leur propre poids rempli d'eau ou à l'aide d'une assistance (vérins ou moteurs), jusqu'à la position de la Figure 31 où les liaisons articulées LA1, LA1' sont verrouillées dans cette position.

On observe que les roues RO1, RO1' débordent alors vers le bas, et l'ensemble se transforme ainsi en un ensemble roulant permettant d'amener le bateau constituant la structure S2 sur le rivage. Ceci peut être réalisé soit manuellement, soit avec un engin de traction, soit en motorisant les roues RO1, RO1'.

La transition entre la situation de la Figure 28 et celle de la Figure 31 s'effectue alors que l'ensemble est flottant à proximité du rivage, avec une profondeur suffisante pour permettre le mouvement des flotteurs F1, F1' vers le bas, sans que les roues ne touchent alors le fond. Dans cette situation, le propulseur P2 du bateau S2 peut être utilisé pour approcher l'ensemble du rivage et pour amorcer la mise au sec.

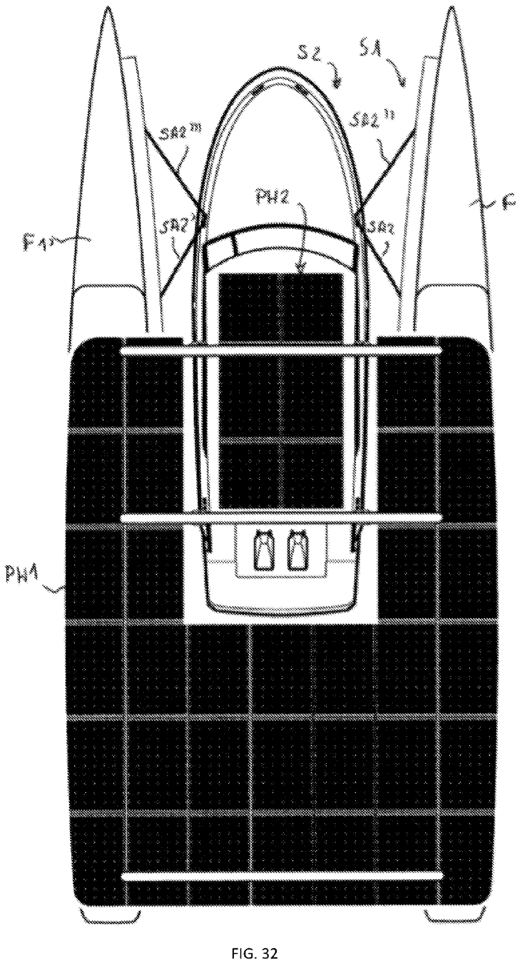

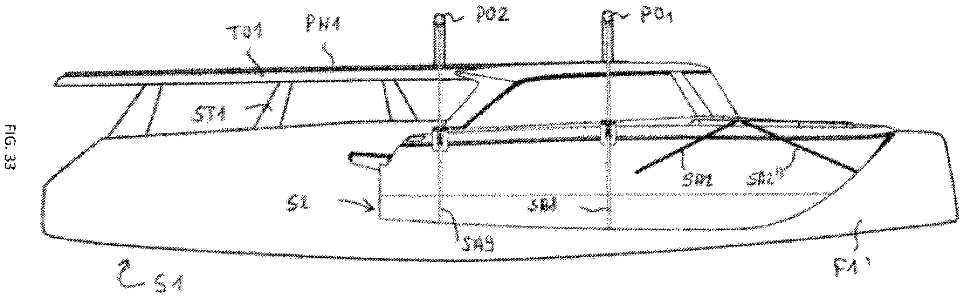

On a illustré sur les Figures 32 et 33 une variante de réalisation où l'ensemble S1 forme un catamaran de configuration générale en « U » ouvert vers l'avant. Dans ce cas, la structure S2 est engagée dans la structure S1 en marche arrière. On observe également sur cette Figure que la structure S2 est également dotée d'un toit TO2 comportant des panneaux photovoltaïques PH2 pouvant contribuer à la charge des batteries que la structure S2 embarque.

On observe sur les Figures 32 et 33 une première paire de sangles SA2, SA2' capables d'assurer la traction de la structure S1 par la structure S2 en marche avant et une deuxième paire de sangles SA2", SA2‴ capables d'assurer la traction de la structure S1 par la structure S2 en marche arrière.

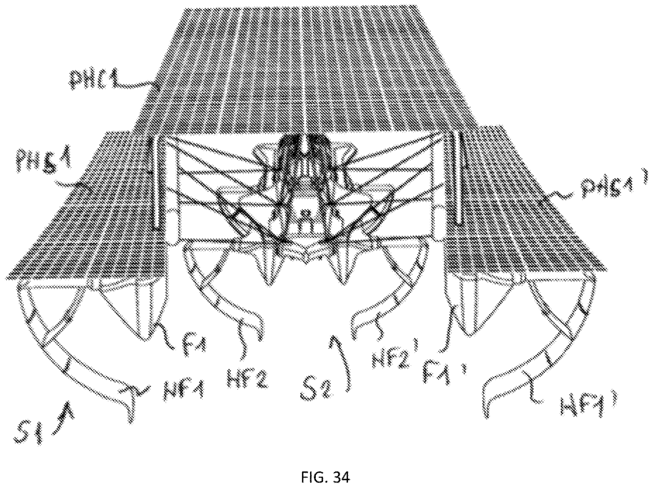

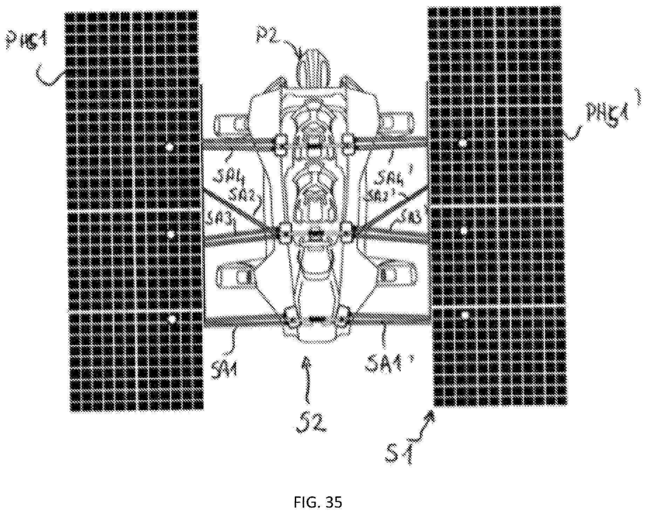

En référence maintenant aux Figures 34 et 35, on a représenté une variante de réalisation où la structure S1 et la structure S2 sont chacune du type à quatre hydrofoils. La structure S2 et par exemple du type commercialisé par la société Quadrofoil d.o.o., Partizanska ulica 38, 2310 Slovenska Bistrica. La structure S1 peut comprendre des hydrofoils du même type.

On observe également sur ces Figures que la structure S1 comporte des panneaux photovoltaïques secondaires PHS1, PHS1' immédiatement au-dessus des flotteurs F1, F1, et une superstructure ST1 avec un toit TO1 doté de panneaux photovoltaïques centraux PHC1 situés à un niveau plus élevé que les panneaux latéraux pour permettre d'accueillir au-dessous la structure S2.

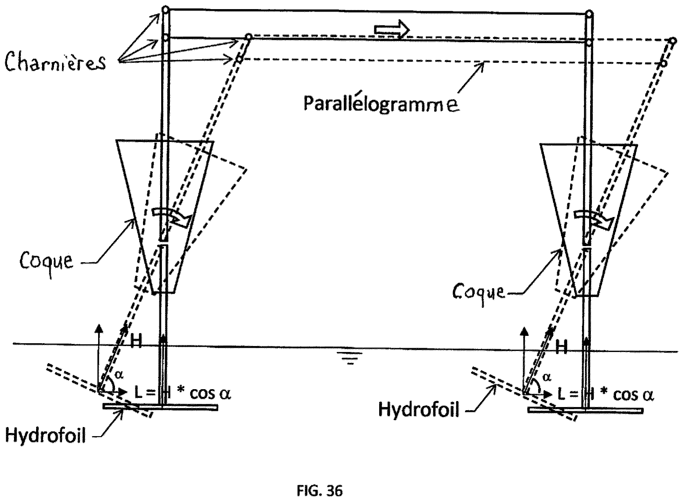

Dans les figures 36 à 43, la première structure comprend des hydrofoils placés sous les coques respectives et la deuxième structure comprend également des hydrofoils.

Rappelons qu'au moins la deuxième structure est propulsée et, classiquement, lors d'un virage, le propulseur (P2) fait effectuer à la deuxième structure une rotation d'un certain angle autour d'un axe parallèle à son axe longitudinal (c'est-à-dire autour d'un axe parallèle à sa trajectoire). Autrement dit, la coque « s'incline » latéralement lors des virages, ce qui est classique.

En présence d'hydrofoils, une telle rotation provoque une poussée latérale (« rudder effect ») sur les hydrofoils dont la force est fonction de l'angle de cette rotation.

On va maintenant décrire la dix-septième forme de réalisation de l'invention permettant de bénéficier d'une telle poussée latérale lors des virages, non seulement sur les hydrofoils de la deuxième structure mais aussi sur ceux de la première, l'idée ici étant d'obtenir une inclinaison des hydrofoils de la première structure, de même angle que ceux de la deuxième structure :

La superstructure (ST1) de la première structure est une ossature articulée (Parallelogram) maintenant les coques (Hull) de façon à ce que, lors des virages, elles effectuent toutes une rotation d'un même angle autour d'un axe parallèle à leur trajectoire, tout en restant sur un plan horizontal (si l'on ne tient pas compte des influences externes).

L'ossature articulée (Parallelogram) comprend des articulations (Hinges) placées sur des lignes parallèles, dans des plans verticaux perpendiculaires à la trajectoire de la première structure, les lignes étant verticales lorsque les coques ne sont pas inclinés et l'angle des lignes par rapport à la verticale variant selon l'angle de rotation des coques. La deuxième structure peut être assemblée avec la première sur une telle ligne dans chaque plan vertical, de façon à ce qu'une rotation de la coque de la deuxième structure (autour d'un axe parallèle à sa trajectoire) entraîne une rotation d'un même angle pour les coques de la première structure.

La figure 36 présente schématiquement une vue de face (plus exactement, une section verticale perpendiculaire à la trajectoire) de la première structure (ici un catamaran) selon cette forme de réalisation et montre que la forme normalement rectangulaire de la section de l'ossature articulée (Parallelogram) prend la forme d'un parallélogramme suite à la rotation des coques.

La figure 36 indique aussi que les hydrofoils provoquent, de manière uniforme sous les différentes coques, lors du virage, une poussée latérale « L » (due à la résistance qu'oppose la mer), en fonction dudit angle de rotation autour d'un axe parallèle à la trajectoire.

En effet, l'angle que prend chaque hydrofoil suite à sa rotation provoque l'apparition d'une composante horizontale de la poussée (H) de l'hydrofoil (L = H*Cos : projection sur le plan horizontal ; dans la figure, étant égal à 90° moins ledit angle de rotation)

On voit aussi que les poussées latérales provoquées par les différents hydrofoils restent généralement sur un même plan horizontal ce qui résulte en des poussées latérales dans un plan généralement horizontal.

La forme rectiligne des hydrofoils, très schématiquement montrée dans la figure, est avantageuse pour cette forme de réalisation (comparée à des formes courbes, en « V » incliné ou triangulaires par exemple).

La deuxième structure peut être assemblée avec la première structure au niveau desdites lignes parallèles (sur les plans verticaux perpendiculaires à la trajectoire) de l'ossature articulée (Parallelogram), une inclinaison de la coque (et des hydrofoils) de la deuxième structure entrainant alors une inclinaison de même angle des coques (et hydrofoils) de la première structure.

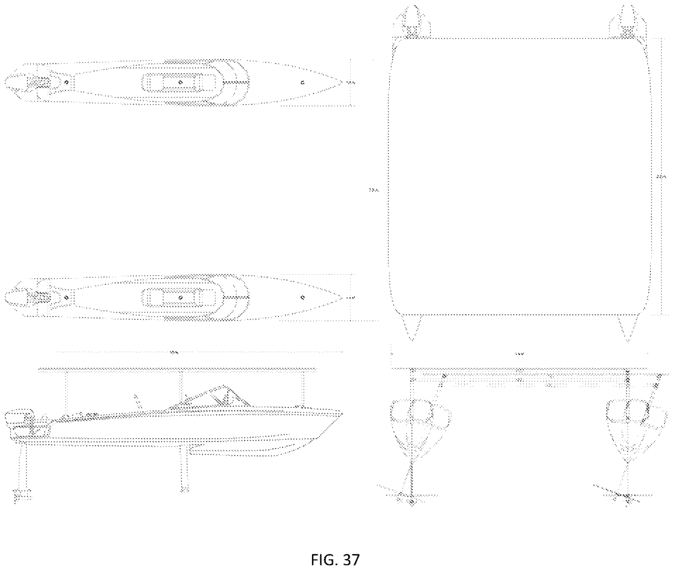

Dans la figure 37 et les suivantes, les coques de la première structure sont avantageusement aussi dotées de propulseurs, qui ajoutent à la propulsion de l'ensemble et aux inclinaisons provoquant une poussée latérale dans les virages, et permet en outre, à la première structure, de naviguer de manière autonome lorsqu'elle est désassemblée de la deuxième structure.

La figure 37 présente une première structure catamaran dont les coques sont reliées par ladite superstructure étant une ossature articulée (Parallelogram). Dans une vue de dessus, on voit un toit solaire couvrant une partie substantielle de l'ensemble. Dans les autres vues, on voit que la superstucture (Parallelogram) est soutenue par trois piliers verticaux sur chaque coque.

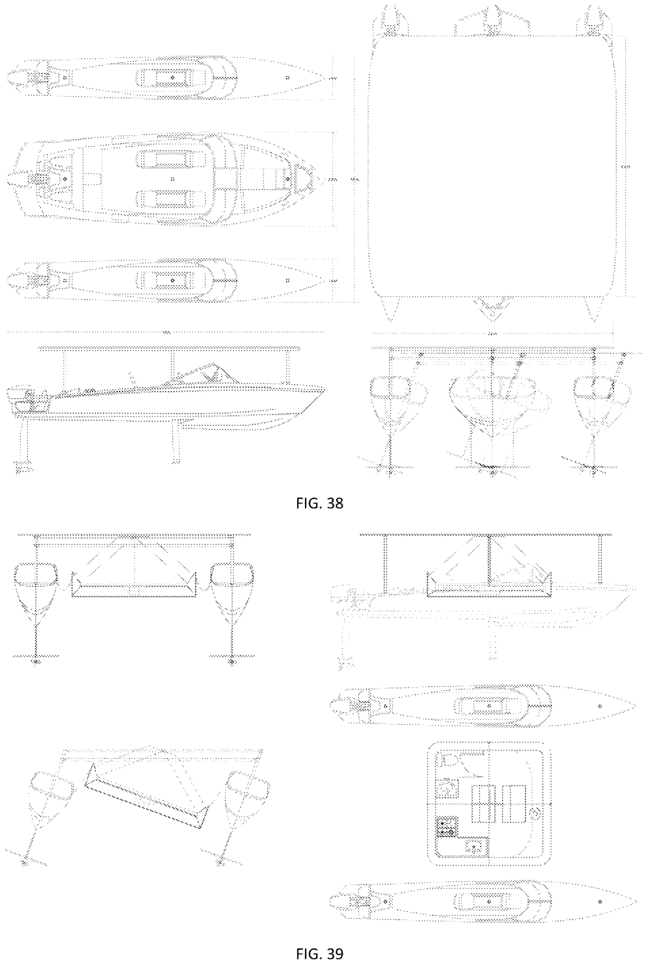

La figure 38 présente la structure de la figure 37 assemblée avec une deuxième structure, les deux structures ayant des hydrofoils. On voit dans cette figure que, grâce à l'ossature articulée (Parallélogramme) de cette forme de réalisation de l'invention, les deux structures s'inclinent d'un même angle, tout en restant généralement sur un plan horizontal.

Les figures 37 et 38 illustrent ainsi les avantages essentiels de l'invention, à savoir
- qu'une deuxième structure peut être assemblée avec l'ossature (ST1, Parallelogram) de la première structure et dans ce cas, ses batteries sont alimentées par l'agencement photovoltaïque de la première structure et les coques de la première structure la stabilisent (en haute mer, en cas de vagues) en jouant le rôle de flotteurs latéraux et, en échange, la première structure utilise la deuxième structure pour être propulsée (ou propulsée davantage), une inclinaison de la coque (et des hydrofoils) de la deuxième structure lors des virages entrainant une inclinaison de même angle des coques (et hydrofoils) de la première structure (et réciproquement), accentuant ainsi les virages, et
- la deuxième structure peut être désassemblée et déconnectée de la première pour se mouvoir en autonome tant que ses batteries ne sont pas déchargées (lorsque l'état de la mer le permet, avec l'avantage de pouvoir aller à plus grande vitesse et en consommant moins d'énergie), la première structure continuant à offrir un espace de vie, de couchage, de travail, etc.

Avantageusement, la première structure peut comprendre des batteries électriques placées sur une structure située entre les coques.

La forme de réalisation présentée dans la suite, en référence aux figures 39 à 43, exploite avantageusement les poids des batteries électriques pour automatiquement rééquilibrer (self-balancing, load-balancing) un plancher situé dans l'espace (E1) entre les coques, en visant à le maintenir horizontal, en compensant dynamiquement les poids décentrés (par un simple jeu de contrepoids et de poulies, les batteries électriques, tout en restant opérationnelles, étant en plus utilisées comme contrepoids).

Ainsi, la figure 39 présente la même première structure qu'à la figure 37 mais avec, entre les coques, un plancher suspendu auto-équilibré, des batteries électriques roulantes (aptes à rouler sur des rails) servant à assurer l'auto-équilibrage. La figure montre également (dans la vue de dessus) qu'un espace de vie peut être aménagé sur le plancher.

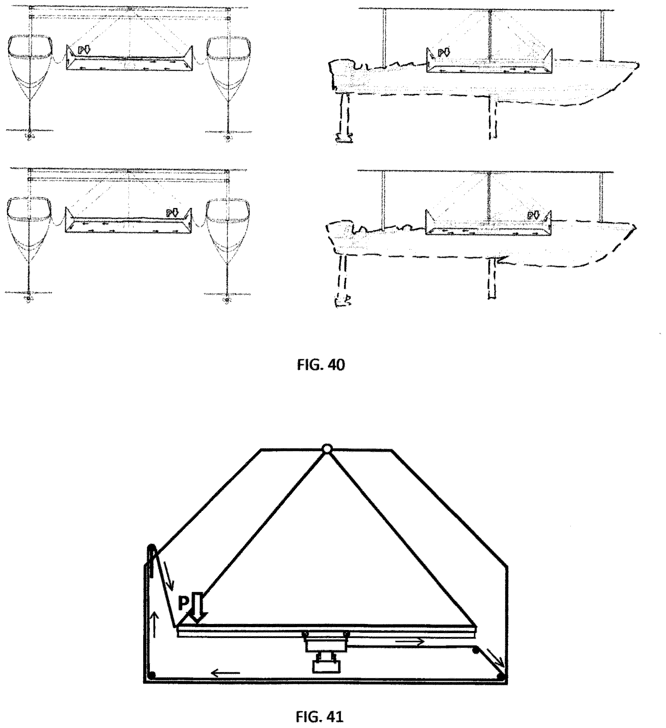

La figure 40 illustre les quatre cas de poids décentrés : à gauche, à droite, devant et derrière, et montre par des flèches dans quel sens les contrepoids (les batteries électriques) roulent dans ces cas respectifs.

On va maintenant décrire le mécanisme d'auto-équilibrage en détail, en référence à la figure 41.

Le plancher est composé de deux partie : 1) le sol et 2) le socle. Ces parties sont toutes deux suspendues au centre de la superstructure (Parallelogram) de la première structure.

Le socle sert de référence pour l'horizontalité, et les poids décentrés qui se trouvent sur le sol, qui, le cas échéant, causent une non-horizontalité du sol par rapport au socle, sont compensés par un repositionnement automatique de contrepoids roulants sur des rails (les batteries), à l'aide d'un système de poulies fixées sur le socle.

Ainsi, sous le sol se trouve une première batterie qui peut rouler sur rails, horizontalement : vers la gauche et vers la droite dans la figure, et en dessous de cette première batterie roulante, une seconde batterie peut rouler horizontalement sur rails perpendiculairement à la première : vers l'avant et vers l'arrière.

La figure 41 montre un poids décentré "P" sur le côté gauche (pour signifier que le centre de gravité a été déplacé vers la gauche). En conséquence, le sol tire verticalement (vers le bas) sur la corde à gauche et, via les poulies, la première batterie est tirée et roule vers la droite - cette figure montre des flèches sur les cordes autour des poulies pour indiquer dans quelle direction elles vont.

Seul le mécanisme pour contrebalancer un poids décentré à gauche est montré. Lorsqu'un poids en excès est plutôt situé à l'avant (ou à l'arrière), le rééquilibrage se fait exactement de la même manière : la seconde batterie roule automatiquement vers l'avant (resp. vers l'arrière), c'est-à-dire du côté opposé du poids en excès.

Avantageusement, ce rééquilibrage est effectué seulement lorsque le catamaran ne navigue pas. Lors de la navigation, les batteries sont fixes (c'est-à-dire qu'elles ne peuvent pas rouler sur leurs rails).

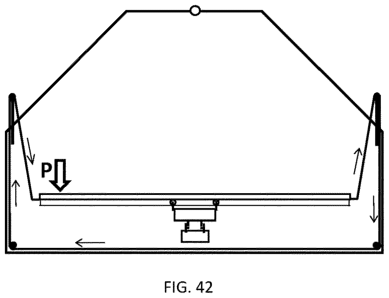

La figure 42 présente schématiquement une variante au plancher de la figure 41, dans laquelle le sol est supendu au socle plutôt que directement à la superstructure, au moyen d'un jeu de poulies (indépendant des poulies servant au rééquilibrage - seules les poulies servant à suspendre le sol sont montrées dans la figure).

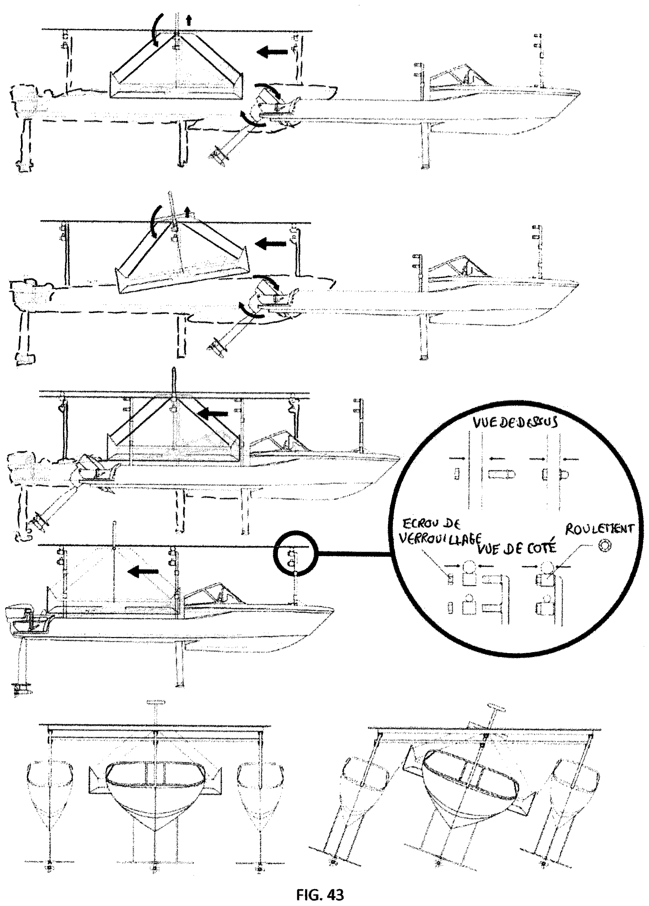

Enfin, la figure 43 présente des vues de côté montrant comment une deuxième structure peut, en avançant en marche arrière, se placer dans l'espace (E1) entre les coques, s'assembler avec la première structure et porter le plancher auto-équilibré, un levier permettant de le surélever lors de l'arrivée de la deuxième structure. Des détails d'assemblage sont montrés dans la figure.

Les figures sont schématiques et ne montrent pas des détails tels que des contreventements en diagonale (par exemple en nylon) dans des plans verticaux pour renforcer les 3 piliers montrés pour la deuxième structure et les six piliers montrés pour la première structure.

Avantageusement, une partie de la superstructure peut être surélevée pour laisser plus de place sous le toit.

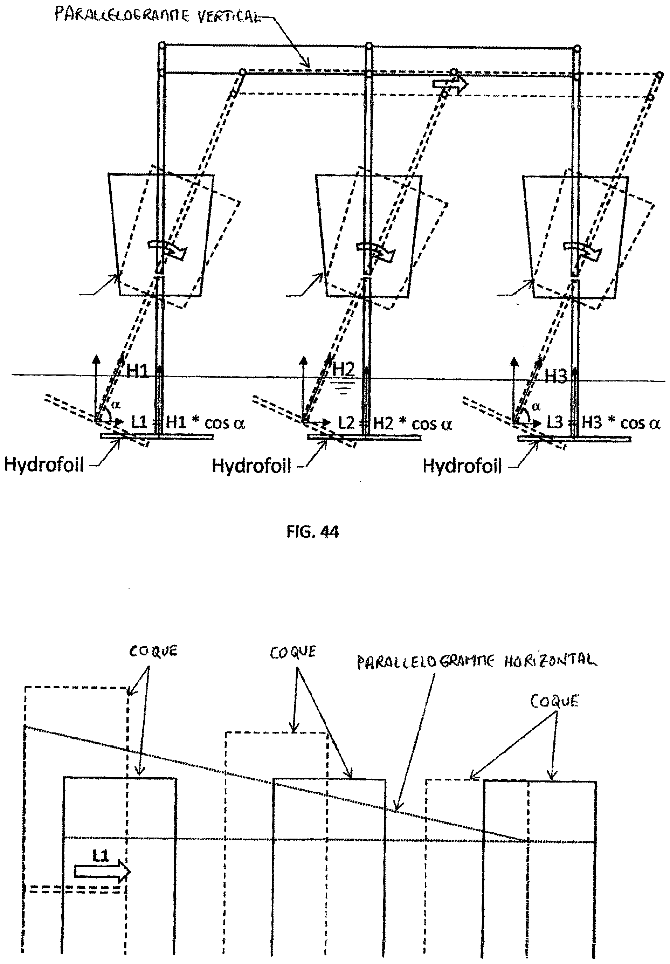

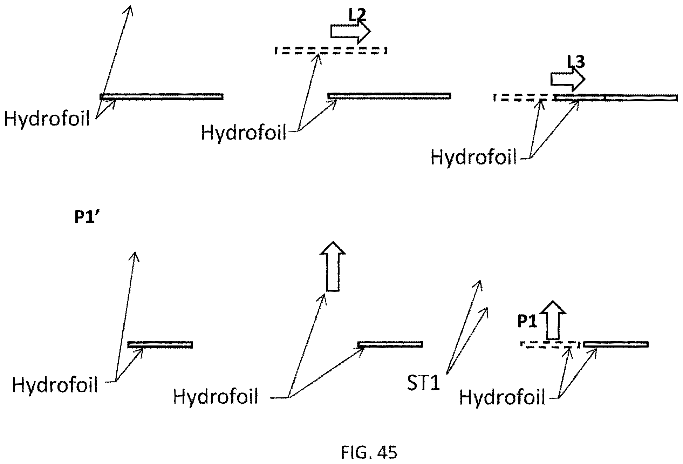

Enfin, les figure 44 et 45 présentent respectivement une vue de face schématique et la vue de dessus correspondante d'un ensemble selon la dix-septième forme de réalisation.

Ces figures montrent qu'il est avantageux pour cette forme de réalisation d'avoir vers le milieu de la coque un hydrofoil relativement plus large (et un hydrofoil relativement étroit au niveau de l'hélice, ce dernier provoquant ainsi une poussée latérale plus faible que l'hydrofoil du milieu lors des virages), et qu'il est aussi avantageux que la superstructure (ST1) change de forme (vue de dessus) lors des virages : passer de la forme d'un rectangle à la forme d'un parallélogramme (Horizontal Parallelogram), comme le montre la figure 45, de sorte à ce que la poussée latérale « L » provoquée par les hydrofoil des coques qui sont plus à l'extérieur par rapport au virage (c'est-à-dire qui sont plus du côté opposé au virage) soit positionnée plus à l'avant. Cette transformation peut être réalisée par des moyens mécaniques ou en augmentant la puissance de propulseurs qui sont plus à l'extérieur.

Bien entendu, la présente invention n'est nullement limitée aux formes de réalisation décrites et représentées sur les dessins, mais l'homme du métier saura y apporter de nombreuses variantes et modifications.

## Revendications

1. Ensemble naviguant, comprenant un première structure flottante (S1) comprenant au moins deux coques (F1, F1' ; F11, F11', F12, F12') délimitant entre elles un espace (E1), et un agencement photovoltaïque (PH1) occupant une partie substantielle de l'emprise de la première structure flottante, et une deuxième structure flottante (S2) dotée d'un propulseur électrique (P2) et d'une batterie (B2), des moyens pour assembler les deux structures flottantes de façon séparable, l'ensemble comprenant des moyens de connexion électrique entre l'agencement photovoltaïque de la première structure flottante et la batterie de la deuxième structure flottante, **caractérisé en ce que** cette dernière peut être sélectivement utilisée soit pour mouvoir les deux structures (S1, S2) et leur permettre de naviguer avec guidage directionnel, soit comme engin marin motorisé autonome.

2. Ensemble selon la revendication 1, **caractérisé en ce que** les moyens d'assemblage comprennent des moyens d'arrimage des deux structures de façon séparable, eux-mêmes comprenant des moyens d'absorption de chocs et/ou de déformations.

3. Ensemble selon la revendication 1 ou 2, **caractérisé en ce que** la première structure flottante (S1) comprend également au moins un propulseur électrique.

4. Ensemble selon l'une des revendications 1 à 3, **caractérisé en ce que** la première structure flottante (S1) comprend également une batterie.

5. Ensemble selon l'une des revendications 1 à 4, **caractérisé en ce qu'**il comprend des moyens de commande de l'inclinaison entre un axe principal de la première structure et un axe principal de le deuxième structure flottante.

6. Ensemble selon l'une des revendications 2 à 5, **caractérisé en ce que** la première structure flottante comprend une première paire de flotteurs latéraux fixes et une deuxième paire de flotteurs montés sur un équipage mobile pivotant autour d'un axe vertical, les flotteurs de la deuxième paire étant situés en avant des flotteurs de la première paire.

7. Ensemble selon la revendication 6, caractérisé en ce les moyens d'arrimage comprennent un moyen de traction de la première structure par la deuxième structure.

8. Ensemble selon la revendication 7, **caractérisé en ce que** la deuxième structure est reliée à l'équipage mobile de la première structure, ledit équipage mobile adaptant son orientation en fonction de la direction de traction.

9. Ensemble selon l'une des revendications 7 et 8, **caractérisé en ce que** lorsque les deux structures flottantes sont arrimées, la deuxième structure se situe essentiellement dans l'emprise de la première structure, le moyen de traction opérant entre la région avant de la deuxième structure et l'équipage mobile.

10. Ensemble selon la revendication 9, **caractérisé en ce que** la deuxième structure agit mécaniquement sur l'angle d'un safran de la première structure lorsque la deuxième structure prend un virage, permettant ainsi d'opérer un virage plus court.

11. Ensemble selon l'une des revendications 2 à 5, **caractérisé en ce que** la première structure comprend à l'arrière un arceau (U-bar) en forme de « U », les moyens d'arrimage comprennent un moyen de retenue dans une direction avant-arrière de la deuxième structure par rapport à la première, apte à relier la deuxième structure à l'arceau de la première structure, et, lorsque les deux structures flottantes sont arrimées, la deuxième structure se situe dans l'emprise de l'arceau et est apte à tracter la première structure via le moyen de retenue avant-arrière.

12. Ensemble selon l'une des revendications 1 à 4, **caractérisé en ce que** les moyens pour assembler les deux structures flottantes de façon séparable comprennent un dispositif d'assemblage comprenant des moyens (SA5-SA7, SA5', SA7', SA8-SA10, SA8'-SA10', PA1-PA3, PA1'-PA3', etc.) de suspension de la deuxième structure flottante à une superstructure (ST1) de la première structure flottante, le dispositif d'assemblage permettant de maximiser la surface de l'agencement photovoltaïque (PH1).

13. Ensemble selon la revendication 12, **caractérisé en ce que** la superstructure (ST1) de la première structure flottante porte un toit (TO1) supportant l'agencement photovoltaïque (PH1).

14. Ensemble selon l'une des revendications 12 et 13, **caractérisé en ce que** la première structure flottante et/ou la deuxième structure flottante comprend des hydrofoils (HF ; HF1, HF2).

15. Ensemble selon l'une des revendications 12 à 15, **caractérisé en ce que** l'agencement de panneaux photovoltaïques (PH1) de la première structure comprend des panneaux mobiles pouvant être sélectivement déployés.

## Patentansprüche

1. Segelbaugruppe, umfassend eine erste schwimmende Struktur (S1), die mindestens zwei Rümpfe (F1, F1'; F11, F11' F12, F12') umfasst, die zwischen sich einen Raum (E1) begrenzen, und eine Photovoltaikanordnung (PH1), die einen wesentlichen Teil der Grundfläche der ersten schwimmenden Struktur einnimmt, und eine zweite schwimmende Struktur (S2), die mit einem elektrischen Propeller (P2) und einer Batterie (B2) ausgestattet ist, sowie Mittel zum trennbaren Zusammenbau der beiden schwimmenden Strukturen, all dies umfassend elektrische Verbindungsmittel zwischen der Photovoltaikanordnung der ersten schwimmenden Struktur und der Batterie der zweiten schwimmenden Struktur, **dadurch gekennzeichnet, dass** letztere wahlweise zum Bewegen der beiden Strukturen (S1, S2) und deren Navigation mit Richtungsführung oder als autonomes motorisiertes Schiffsfahrzeug eingesetzt werden kann.

2. Baugruppe nach Anspruch 1, **dadurch gekennzeichnet, dass** die Montagemittel Mittel zur trennbaren Befestigung der beiden Strukturen umfassen, die ihrerseits Mittel zum Absorbieren von Stößen und/oder Verformungen umfassen.

3. Baugruppe nach Anspruch 1 oder 2, **dadurch gekennzeichnet, dass** die erste schwimmende Struktur (S1) außerdem mindestens ein elektrisches Triebwerk umfasst.

4. Baugruppe nach einem der Ansprüche 1 bis 3,
**dadurch gekennzeichnet, dass** die erste schwimmende Struktur (S1) auch eine Batterie umfasst.

5. Baugruppe nach einem der Ansprüche 1 bis 4,
**dadurch gekennzeichnet, dass** sie Mittel zur Steuerung der Neigung zwischen einer Hauptachse der ersten Struktur und einer Hauptachse der zweiten schwimmenden Struktur umfasst.

6. Baugruppe *nach* einem der Ansprüche 2 bis 5,
**dadurch gekennzeichnet, dass** die erste schwimmende Struktur ein erstes Paar fester seitlicher Schwimmer und ein zweites Paar Schwimmer umfasst, die auf einer beweglichen Baugruppe montiert sind, die um eine vertikale Achse schwenkt, wobei die Schwimmer des zweiten Paares vor den Schwimmern des ersten Paares angeordnet sind.

7. Baugruppe nach Anspruch 6, **dadurch gekennzeichnet, dass** die Sicherungsmittel ein Mittel zum Ziehen der ersten Struktur durch die zweite Struktur umfassen.

8. Baugruppe nach Anspruch 7, **dadurch gekennzeichnet, dass** die zweite Struktur mit der beweglichen Baugruppe der ersten Struktur verbunden ist, wobei die bewegliche Baugruppe ihre Ausrichtung entsprechend der Zugrichtung anpasst.

9. Baugruppe nach einem der Ansprüche 7 und 8,
**dadurch gekennzeichnet, dass,** wenn die beiden schwimmenden Strukturen verstaut sind, sich die zweite Struktur im Wesentlichen innerhalb der Grundfläche der ersten Struktur befindet, wobei die Zugmittel zwischen dem vorderen Bereich der zweiten Struktur und der mobilen Ausrüstung wirken.

10. Baugruppe nach Anspruch 9,
**dadurch gekennzeichnet, dass** die zweite Struktur mechanisch auf den Winkel eines Ruders der ersten Struktur wirkt, wenn die zweite Struktur eine Kurve macht, und so eine kürzere Kurve ermöglicht.

11. Baugruppe nach einem der Ansprüche 2 bis 5,
**dadurch gekennzeichnet, dass** die erste Struktur an der Rückseite einen "U"-förmigen Bogen (U-Stange) umfasst, wobei die Befestigungsmittel ein Haltemittel in einer Richtung von vorne nach hinten der zweiten Struktur relativ zur ersten umfassen, das in der Lage ist, die zweite Struktur bogenförmig mit der ersten Struktur zu verbinden, und wenn die beiden schwimmenden Strukturen verstaut sind, befindet sich die zweite Struktur im Griff des Bogens und ist in der Lage, die erste Struktur über die vorderen Haltemittel nach hinten zu ziehen.

12. Baugruppe nach einem der Ansprüche 1 bis 4,
**dadurch gekennzeichnet, dass** die Mittel zum trennbaren Zusammenbau der beiden schwimmenden Strukturen eine Montagevorrichtung umfassen, die Mittel zur Aufhängung (SA5-SA7, SA5', SA7', SA8-SA10, SA8'- SA10', PA1-PA3, PA1'-PA3' usw.) der zweiten schwimmenden Struktur an einem Überbau (ST1) der ersten schwimmenden Struktur umfasst, wobei die Montagevorrichtung eine Maximierung der Oberfläche der Photovoltaikanordnung (PH1) ermöglicht.

13. Baugruppe nach Anspruch 12, **dadurch gekennzeichnet, dass** der Überbau (ST1) der ersten schwimmenden Struktur ein Dach (TO1) trägt, das die Photovoltaikanordnung (PH1) trägt.

14. Baugruppe nach einem der Ansprüche 12 und 13,
**dadurch gekennzeichnet, dass** die erste schwimmende Struktur und/oder die zweite schwimmende Struktur Hydrofoils (HF; HF1, HF2) umfasst.

15. Baugruppe nach einem der Ansprüche 12 bis 15,
**dadurch gekennzeichnet, dass** die Photovoltaik-Paneel-Anordnung (PH1) der ersten Struktur bewegliche Paneele umfasst, die selektiv eingesetzt werden können.

## Claims

1. A sailing assembly, comprising a first floating structure (S1) comprising at least two hulls (F1, F1'; F11, F11' F12, F12') delimiting a space (E1) therebetween, and a photovoltaic arrangement (PH1) occupying a substantial part of the footprint of the first floating structure, and a second floating structure (S2) provided with an electric thruster (P2) and a battery (B2), means for separably assembling the two floating structures, the assembly comprising electrical connection means between the photovoltaic arrangement of the first floating structure and the battery of the second floating structure, **characterized in that** the second floating structure can be selectively used either to move the two structures (S1, S2) and allow them to navigate with directional guidance, or as an autonomous motorized marine craft.

2. The assembly according to claim 1, **characterized in that** the assembly means comprise means for releasably stowing the two structures, themselves comprising means for absorbing shocks and/or deformations.

3. The assembly according to claim 1 or 2, **characterized in that** the first floating structure (S1) also comprises at least one electric thruster.

4. The assembly according to one of claims 1 to 3, **characterized in that** the first floating structure (S1) also comprises a battery.

5. The assembly according to one of claims 1 to 4, **characterized in that** it comprises means for controlling the gradient between a main axis of the first structure and a main axis of the second floating structure.

6. The assembly according to one of claims 2 to 5, **characterized in that** the first floating structure comprises a first pair of fixed lateral floats and a second pair of floats mounted on mobile equipment pivoting about a vertical axis, the floats of the second pair being located in front of the floats of the first pair.

7. The assembly according to claim 6, **characterized in that** the securing means comprise means for pulling the first structure by the second structure.

8. The assembly according to claim 7, **characterized in that** the second structure is connected to the mobile equipment of the first structure, said mobile equipment adapting its orientation as a function of the direction of traction.

9. The assembly according to one of claims 7 and 8, **characterized in that** when the two floating structures are stowed, the second structure is located essentially in the footprint of the first structure, the traction means operating between the forward region of the second structure and the mobile equipment.

10. The assembly according to claim 9, **characterized in that** the second structure mechanically acts on the angle of a rudder blade of the first structure when the second structure takes a turn, thus enabling a shorter turn to be made.

11. The assembly according to one of claims 2 to 5, **characterized in that** the first structure comprises at the rear a U-bar, the securing means comprise means for retaining the second structure in a fore-and-aft direction relative to the first, able to connect the second structure to the U-bar of the first structure, and, when the two floating structures are stowed, the second structure is located in the footprint of the U-bar and is able to tow the first structure via the fore-aft retaining means.

12. The assembly according to one of claims 1 to 4, **characterized in that** the means for separably assembling the two floating structures comprise an assembly device comprising means (SA5-SA7, SA5', SA7', SA8-SA10, SA8'- SA10', PA1-PA3, PA1'-PA3', etc.) for suspending the second floating structure from a superstructure (ST1) of the first floating structure, the assembly device allowing the surface area of the photovoltaic arrangement (PH1) to be maximized.

13. The assembly according to claim 12, **characterized in that** the superstructure (ST1) of the first floating structure has a roof (TO1) supporting the photovoltaic arrangement (PH1).

14. The assembly according to one of claims 12 and 13,
**characterized in that** the first floating structure and/or the second floating structure comprise hydrofoils (HF; HF1, HF2).

15. The assembly according to one of claims 12 to 15, **characterized in that** the arrangement of photovoltaic panels (PH1) of the first structure comprises movable panels that can be selectively deployed.
